(19) Europäisches Patentamt
European Patent Office
Office européen des brevets

(11) EP 0 583 818 B1

(12) **EUROPEAN PATENT SPECIFICATION**

(45) Date of publication and mention of the grant of the patent:
**07.10.1998 Bulletin 1998/41**

(51) Int Cl.⁶: **G11B 20/10, H04L 25/03**

(21) Application number: **93202243.7**

(22) Date of filing: **29.07.1993**

(54) **Receiving arrangement for receiving a digital signal from a transmission medium, including variable equalizer means**

Empfangsanordnung zum Empfang eines digitalen Signals von einem Übertragungsmedium mit variablen Entzerrungsmitteln

Dispositif de réception d'un signal numérique à partir d'un moyen de transmission, comportant un correcteur variable

(84) Designated Contracting States:
**AT BE DE FR GB**

(30) Priority: **06.08.1992 EP 92202428**

(43) Date of publication of application:
**23.02.1994 Bulletin 1994/08**

(73) Proprietor: **Koninklijke Philips Electronics N.V.**
**5621 BA Eindhoven (NL)**

(72) Inventors:
• **Kahlman, Josephus Arnoldus Henricus Maria**
**NL-5656 AA Eindhoven (NL)**
• **Rijckaert, Albert Maria Arnold**
**NL-5656 AA Eindhoven (NL)**

(74) Representative:
**van der Kruk, Willem Leonardus et al**
**INTERNATIONAAL OCTROOIBUREAU B.V.,**
**Prof. Holstlaan 6**
**5656 AA Eindhoven (NL)**

(56) References cited:
**EP-A- 0 109 674          EP-A- 0 332 079**
**US-A- 4 907 100**

• **IBM TECHNICAL DISCLOSURE BULLETIN vol. 28, no. 11 , April 1986 , NEW YORK US pages 4857 - 4858 'Adaptive symmetrical interference equalization'**
• **IBM TECHNICAL DISCLOSURE BULLETIN vol. 28, no. 11 , April 1986 , NEW YORK US pages 4880 - 4881 'adaptive mesurement of unsymmetrical interference'**
• **IBM TECHNICAL DISCLOSURE BULLETIN vol. 29, no. 1 , June 1986 , NEW YORK US pages 104 - 105 'Quasi baseband equalization and detection'**

## Description

The invention relates to an arrangement for receiving a digital signal from a transmission medium, the arrangement comprising

- input means for receiving a signal from the transmission medium,
- variable equalizer means, having an input coupled to an output of the input means, a control signal input for receiving a control signal and an output for supplying an equalized output signal,
- signal detector means, having an input coupled to the output of the equalizer means and an output for supplying a first digital signal,
- equalizer control signal generator means, having an output for supplying an equalizer control signal, which output is coupled to the control signal input of the equalizer means,
- an output terminal for supplying the digital signal. Such an arrangement is known from EP 387,813 A2.

In the known arrangement equalization is realized by varying the equalizer filter parameters in response to the control signal supplied to the control signal input. The control signal is obtained by measuring the bit error rate in the digital signal obtained after detection. The control signal obtained has a relation to the level of the bit error rate present in the digital signal, and is such that it realizes an equalization so as to minimize said bit error rate.

The known arrangement has the disadvantage that sometimes an incorrect equalization is realized, resulting in a distorted output signal.

Further, EP-A 322,079 discloses an arrangement for receiving a digital signal from a transmission medium, the arrangement comprising

- input means for receiving a signal from the transmission medium,
- variable equalizer means, having an input coupled to an output of the input means, a control signal input for receiving a control signal and an output for supplying an equalized output signal,
- signal detector means, having an input coupled to the output of the equalizer means and an output for supplying a first digital signal,
- equalizer control signal generator means, having an output for supplying an equalizer control signal, which output is coupled to the control signal input of the equalizer means,
- an output terminal for supplying the digital signal,
- bit array selector means, having an input coupled to the output of the signal detector means and having an output for supplying a first selection signal upon detection of at least one specified array of bits included in the signal applied to its input.

The invention has for its object to provide an arrangement which provides a more robust equalization.

The arrangement is characterized in that, the selector means have a further output for supplying a second selection signal upon detection of at least one other specified array of bits included in the signal applied to its input, the bit array selector means being adapted to select bit arrays corresponding to signal portions in the response at the output of the variable equalizer, so as to select signal portions which are suitable for deriving from them a first and a second control signal for the variable equalizer means,

- sample-and-hold means, having an input coupled to the output of the equalizer means, a control signal input coupled to the output of the bit array selector means, and an output which is coupled to an input of the equalizer control signal generator means, the sample-and-hold means being adapted to sample and hold the signal applied to its input under the influence of the first selection signal so as to obtain at least one first sample value, to sample and hold the signal applied to its input under the influence of the second selection signal so as to obtain at least one second sample value, and to supply the first and second sample values to its output, the equalizer control signal generator means being adapted to generate the first and the second control signal upon receipt of the first and second sample values, the first control signal relating to a first arithmetical combination of the first and the second sample values, the second control signal relating to a second arithmetical combination of the first and the second sample values, the first and the second arithmetical combinations being different from each other, one of the first and second arithmetical combinations comprising an addition of the first sample value and the second sample value, the other one of the first and second arithmetical combinations comprises the step of taking the difference between said first and second sample value.

As an alternative, the arrangement for receiving a digital signal from a transmission medium, comprises

- input means for receiving a signal from the transmission medium,
- variable equalizer means, having an input coupled to an output of the input means, a control signal input for receiving a control signal and an output for supplying an equalized output signal,
- signal detector means, having an input coupled to the output of the equalizer means and an output for supplying a first digital signal,
- equalizer control signal generator means, having an output for supplying an equalizer control signal, which output is coupled to the control signal input of the equalizer means,

- an output terminal for supplying the digital signal,
- bit array selector means, having an input coupled to the output of the signal detector means and having an output for supplying a selection signal upon detection of a specified array of bits included in the signal applied to its input, the bit array selector means (14a) being adapted to select bit arrays so as to select a signal portion in the response at the output of the variable equalizer means which corresponds to a signal portion which is suitable for deriving from it a first and a second control signal for the variable equalizer means,
- sample-and-hold means, having an input coupled to the output of the equalizer means, a control signal input coupled to the output of the bit array selector means, and an output which is coupled to an input of the equalizer control signal generator means, the sample-and-hold means being adapted to sample and hold the signal applied to its input under the influence of the selection signal so as to obtain at least one first sample value and at least one second sample value, and to supply the first and second sample values to its output, the first and second sample values not coinciding with each other in time, the equalizer control signal generator means being adapted to generate the first and the second control signal upon receipt of the first and second sample values, the first control signal relating to a first arithmetical combination of the first and the second sample values, the second control signal relating to a second arithmetical combination of the first and the second sample values, the first and the second arithmetical combinations being different from each other, one of the first and second arithmetical combinations comprising an addition of the first and second sample value, the other one of the first and second arithmetical combinations comprises the step of taking the difference between said first and second sample value.

The invention will be explained in more detail with reference to the embodiments described in the following figure description, in which

figure 1 shows a reproducing arrangement for carrying out a Nyquist 1 detection,
figure 2 shows a Nyquist 1 detection of an isolated positive going step transition in the write current on tape,
figure 3 shows a table which explains the behaviour of the signal read out in response to a step transition of the write current on the tape, as a function of various equalizer settings,
figure 4 shows the influence of an erroneous equalizer setting on the signal read out in response to two step transitions that are spaced 2r away from each other,
figure 5 shows a further elucidated embodiment of a reproducing arrangement for carrying out a Nyquist 1 detection,
figure 6A shows an embodiment of the control signal generator, and figure 6B shows an embodiment of the variable equalizer in the arrangement of figure 5,
figure 7, 8, 9 and 10 show the variable equalizing function carried out on a number of signal responses,
figure 11A an other embodiment of a reproduction arrangement for carrying out a Nyquist 1 detection, and figure 11B shows an embodiment of the control signal generator in the arrangement of figure 11A,
figure 12 shows a partial response class-4 (PR4) detection of an isolated positive going step transition in the write current on tape,
figure 13 shows the influence of an erroneous equalizer setting on the signal read out in response to two step transitions that are spaced $3\tau$ away from each other,
figure 14 shows an embodiment of a reproducing arrangement for carrying out a PR4 detection,
figure 15 and 16 show the variable equalizing function carried out on a number of signal responses,
figure 17 shows a second embodiment for carrying out a PR4 detection,
figure 18 and 19 show a full response detection of an isolated positive going step transition in the write current,
figure 20 shows the influence of an erroneous equalizer setting on the signal read out in response to two step transitions that are spaced $2\tau$ away from each other,
figure 21 shows an embodiment of a reproducing arrangement for carrying out a full response detection,
figure 22 shows a second embodiment of a reproducing arrangement for carrying out a full response detection,
figure 23 shows some explanatory drawings of signals occurring in a full response detection system,
figure 24 shows a third embodiment using full response detection,
figures 25 and 26 show further explanatory drawings of isolated impulses, and
figure 27 shows an explanatory drawing of an isolated step transition.

In order to explain the basis of the invention, reference is made to the Nyquist 1 or PR1 (partial response class 1) detection of a positive going step transition in the write current of a record carrier.

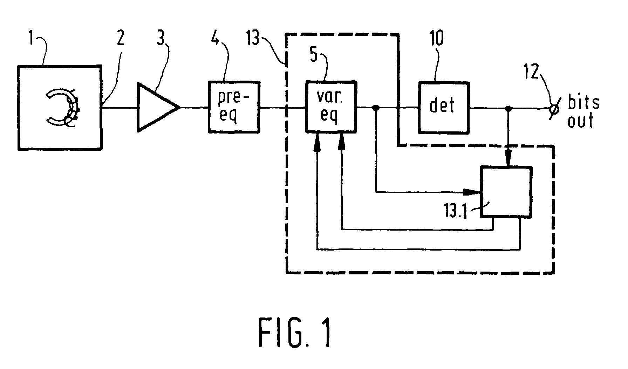

Figure 1 shows an arrangement for reading a digital signal from a magnetic record carrier in accordance with the Nyquist 1 detection. Signals read from the record carrier by means of the read head 1 are amplified in preamplifier 3 and pre-equalized in a pre-equalizer 4. The pre-equalizer 4 realizes a HF emphasis such that it shapes the signal read out as a function of frequency so as to enable a Nyquist 1 detection on the signal in the detector 10. The pre-equalizer 4 compensates for losses occurring in the recording channel. These losses amongst others occur as a result of the properties of the tape that is used, and the quality of the tape-head contact.

As a result of the detection in the bit detector 10, an array of detected bits appear at the output terminal 12.

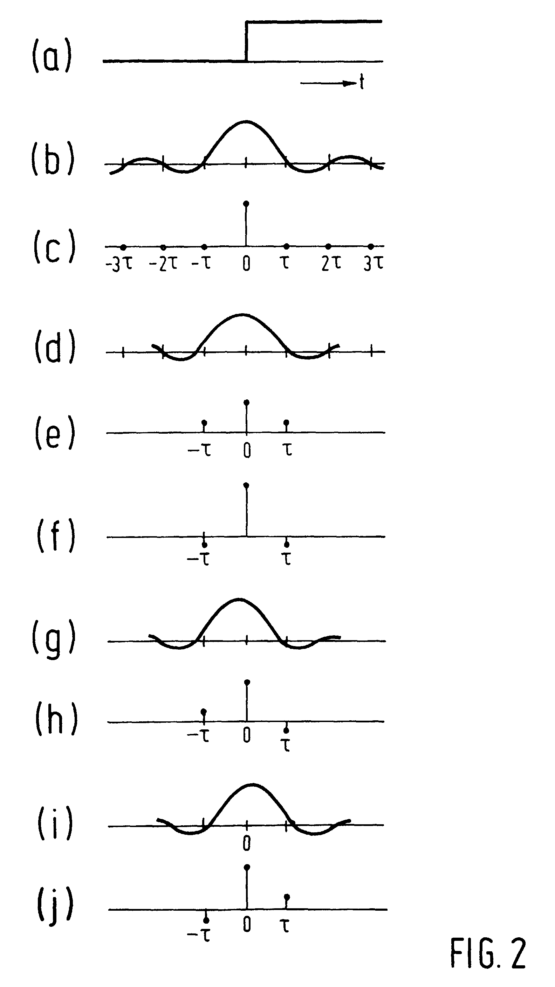

Figure 2a shows the positive going transition in the write current as a function of time.

The transition of figure 2a is recorded on the record carrier and is read out by the differentiating head 1, and shaped in magnitude and phase according to the Nyquist 1 criterion in pre-equalizer 4, which results, in case of an ideal situation, in a response as given in figure 2b and 2c. The signal given in figure 2b is in fact the ideal analog response signal present at the output of the pre-equalizer 4. The signal given in figure 2c is a sampled signal that has been derived in the detector 10 from the signal of figure 2b by taking samples of the signal of figure 2b at the sampling instants .., $-3\tau$, $-2\tau$, $-\tau$, 0, $\tau$, $2\tau$, $3\tau$, .... The sampled signal obtained is in the form of an isolated pulse at the time instant t=0. The samples on the other time instants have a zero amplitude. This sampled signal results in a digital signal at the output of the detector 10 that can be expressed by the following array of bits: (..., 0, 0, 1, 0, 0, ...).

The sampling instants are derived using a PLL, such that one sampling instant is mainly located at the moment of occurrence of the maximum amplitude in the response function of figure 2b.

An inadequate equalization during read-out, changes the pulse width of the signal of figure 2b, which results in samples in the vicinity of the isolated pulse deviating from zero. Figure 2d and 2e show this effect, when the low(er) frequencies in the output signal of the pre-equalizer 4 are over-emphasized compared to the high(er) frequencies in the said output signal. The isolated Nyquist 1 shaped pulse is too wide, which results in a positive amount of intersymbol interference at the time instants t=$-\tau$ and t=$\tau$. The sampled signal can now be expressed as (..., ⌣0, $\delta$, 1-2$\delta$, $\delta$, ⌣0, ...).

Figure 2f shows a situation where the transmission in the transmission path up till the output of the pre-equalizer 4 is such that high(er) frequencies in the transmitted signal are over-emphasized compared to the low(er) frequencies. In that case, a negative amount of intersymbol interference is present as samples that occur at the time instants t=$-\tau$ and t=$\tau$, and which have a negative amplitude. The sampled signal can now be expressed as (..., ~0, -$\delta$, 1+2$\delta$, -$\delta$, ~0, ...).

Figure 2g shows the effect on the signal read out if the transmission in the transmission path up till the output of the pre-equalizer 4 exhibits a delay that is higher for high(er) frequencies than for low(er) frequencies. The result is an asymmetric response, where the inclination angle of the response curve for times larger than zero is larger than for times smaller than zero. Figure 2h shows the corresponding sampled signal. As will be clear from this figure, a sample of positive amplitude appears at the time instant t=$-\tau$, and a sample of negative amplitude appears at the time instant t=$\tau$. The sampled signal can now be expressed as (..., ~0, $\delta$, 1, -$\delta$, ~0, ...).

Figure 2i shows the effect on the signal read out if the transmission in the transmission path up till the output of the pre-equalizer exhibits a delay that is lower for high(er) frequencies than for low(er) frequencies. The result is again an asymmetric response, where the inclination angle of the response curve for times smaller than zero is larger than for times larger than zero . Figure 2j shows the corresponding sampled signal. As will be clear from this figure, a sample of negative amplitude appears at the time instant t=$-\tau$, and a sample of positive amplitude appears at the time instant t=$\tau$. The sampled signal can now be expressed as (..., ⌣0, -$\delta$, 1, $\delta$, ⌣0, ...).

The relationship between the delay D(f) and the phase difference $\phi$(f) will be explained hereafter.

The phase difference $\phi$(f) is the difference in phase between the frequency components of the actual response signal, such as the signal of figure 2g or 2i, and the required response signal, such as given in figure 2b. The curve for the phase difference $\phi$(f) as a function of frequency can be constant, say $\phi_0$. More generally, the phase difference $\phi$(f) equals $\phi_0 - \omega T_c$, where $T_c$ is a delay which is constant for all frequencies and $\omega = 2\pi f$ .

The delay D($\omega_0$) for a low frequency signal having a frequency $\omega_0$ is defined as

$$D(\omega_0) = -\phi/\omega_0.$$

This delay thus equals $-\phi_0/\omega_0 + T_c$.

The delay D($\omega_1$) for a high frequency signal having a frequency $\omega_1$ thus equals $-\phi_0/\omega_1 + T_c$. The difference in delay thus equals $-\phi_0/\omega_0 + \phi_0/\omega_1$. The common delay of $T_c$ has disappeared and thus plays no relevant role.

In the case of a positive $\phi_0$, this means that the delay $D_h$ for high(er) frequencies is higher than the delay $D_1$ for low(er) frequencies.

In the case of a negative value for $\phi_0$, this means that the delay $D_h$ for high(er) frequencies is lower than the delay $D_1$ for low(er) frequencies.

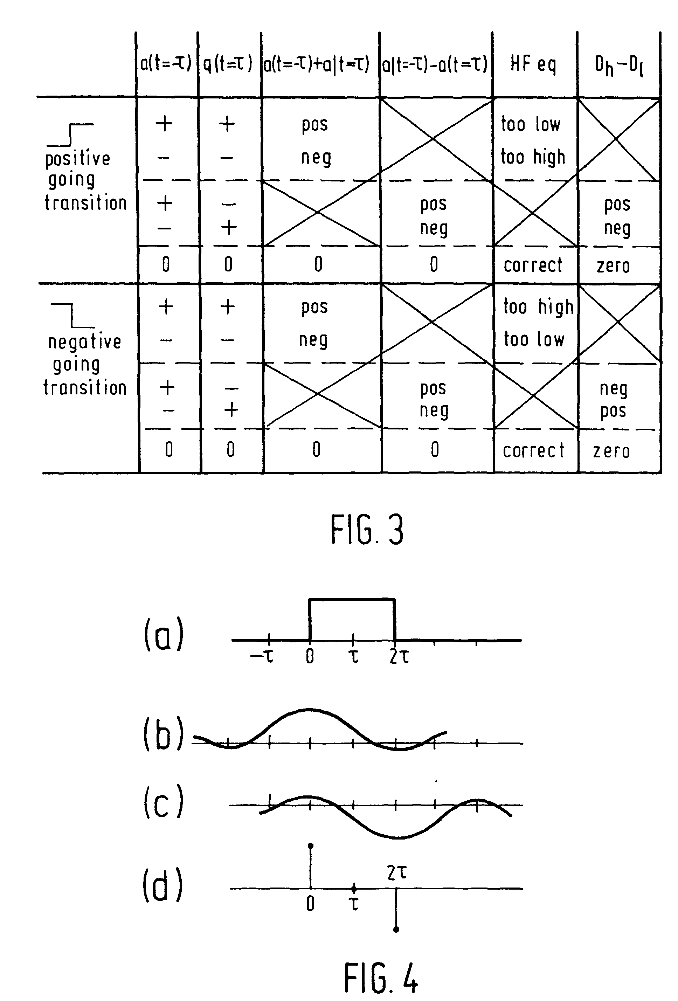

From the foregoing it has become clear that, in a situation where an isolated step transition in the write current occurs, the amplitudes of the samples occurring at the time instants t=$-\tau$ and t=$\tau$ during read-out, give an indication as to the deviation of the step response present at the output of the pre-equalizer 4 from the ideal step response as per the curve of figure 2b. So, they can be used so as to realize an additional equalization in the variable equalizer 5, in order to obtain the response as per figure 2b at the output of the variable equalizer 5. The table given in figure 3 shows all the possible situations that can occur for the samples a(t=$-\tau$) and a(t=$\tau$) that directly adjoin the isolated pulse at t=0, with the conclusions that can be derived from those situations.

The HF equalization being correct, means that no additional equalization as regards magnitude needs to be carried out by the equalizer 5.

The HF equalization being too low means that an additional equalization as regards magnitude needs to be carried out in the equalizer 5, such that the signals in a low(er) frequency region of the operational frequency range are attenuated relative to the signals in a high (er) frequency region of the operational frequency range, or that the signals in the higher frequency region are amplified relative to the signals in the low(er) frequency region.

The HF equalization being too high means that an additional equalization as regards magnitude needs to be carried out in the equalizer 5, such that the signals in the low(er) frequency region are amplified relative to the signals in the high(er) frequency region, or that the signals in the high(er) frequency region are attenuated relative to the signals in the low(er) frequency region.

The difference in delay being zero means that $\phi_0$ is zero. This means that no additional equalization as regards phase need to be carried out.

If $\phi_0$ is not equal to zero, this means that an equalization as regards phase must be carried out by the variable equalizer means, such that the variable equalizer means realizes a phase response $\phi$ which equals $-\phi_0$.

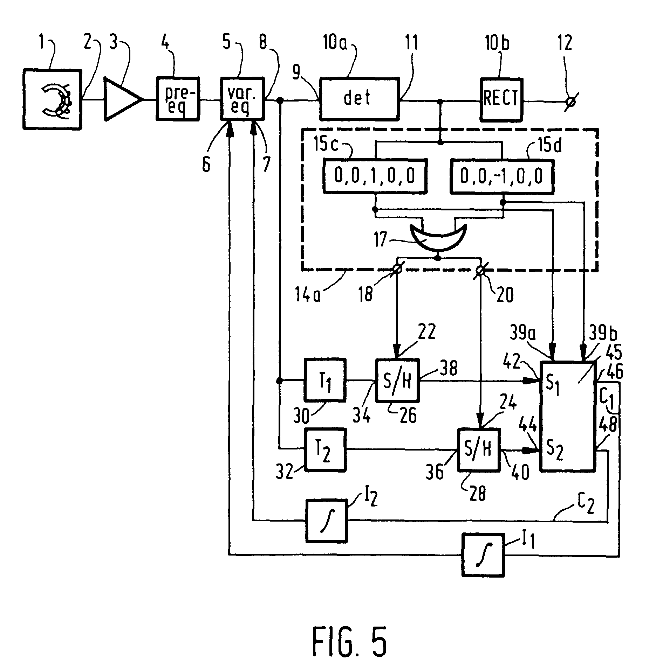

A more specific description of the functioning of the variable equalizer means 13, which includes the variable equalizer 5 and equalizer control signal generator means 13.1, will be given later, see the figures 5 to 11.

It should be noted that the pre-equalizer 4 and the variable equalizer 5 can be combined into one variable equalizer section, which realizes both the pre-equalizer characteristic and the variable equalizer characteristic.

It should further be noted that the conclusions in the table of figure 3 only apply for situations where subsequent transitions in the write current occur not too close to each other, viewed in time. This can be explained with reference to figure 4. Figure 4a shows a situation where a positive going transition occurs at the time interval $2\tau$ prior to the occurrence of a negative going transition. Figure 2b shows the signal read out in response to the positive going transition, and figure 4c shows the signal read out in response to the negative going transition. As can be seen from those figures, the HF equalization is too low. The total response to both transitions is given as the sampled signal in figure 4d, assuming that the superposition principle holds for the recording channel. The signal in figure 4d is the sum of the signals of figure 4b and 4c, sampled at the time instants ...., $-\tau$, 0, $\tau$, $2\tau$, $3\tau$, .... As can be seen from figure 4d, the signal amplitude at $t=\tau$ is zero, as the positive signal amplitude at $t=\tau$ in figure 4b cancels the negative amplitude at $t=\tau$ in figure 4c. Detection of the signal amplitude at $t=\tau$ could lead to the conclusion that no intersymbol interference is present, which is in fact not the case, as has been shown in the figures 4b and 4c. The situation of figure 4a, where the digital write current is in the form of (..., -1, 1, 1, -1, ...) is therefore less suitable for the determination of an incorrect equalization.

From the figures 2e and 2h it is clear that the assumption is made that an incorrect equalization during the read-out of a positive or negative going transition has a major influence on the signal values at the direct neighbouring time instants $t = \pm\tau$ of the time instant $t=0$, and that this influence can be neglected for time instants lying further away from the time instant $t=0$. This has been made clear in figure 2e, 2f, 2h and 2j above, by equalling the amplitude of the sampled signal for the time instants $2\tau$ and $-2\tau$ and further away from $t=0$ to zero. That means that the interaction between two subsequent transitions, as described with reference to figure 4, is considered negligible as soon as two subsequent transitions lie a time spacing of at least $3\tau$ apart. As this should also be the case for a directly preceding transition, it can therefore be concluded that a positive going transition can be used for determining the amount of equalization if the digital write signal has the following form (...,-1, -1, -1, 1, 1, 1, ...), or, if the sampled signal equals ( ..., 0, 0, 1, 0, 0, ...), in the case of an ideal situation. In the same way, a negative going transition in the write current can be used if the digital write signal equals (.., 1, 1, 1, -1, -1, -1), which realizes a sampled signal in the form of the array of samples (..., 0, 0, -1, 0, 0, ...), in the case of an ideal situation. After rectification in the detector 10, both sampled signals realize a detected bit signal in the form of ( .., 0, 0, 1, 0, 0, ..) at the output 12. The two zero-valued samples at time instants $\pm\tau$, that directly adjoin the isolated pulse at time instant $t=0$, are used for determining the correct equalization. This means that each time an array of bits (0, 0, 1, 0, 0) in the digital read-out signal at the output 12 should be detected.

The probability of occurrence of such an array of bits is rather low, namely $2^{-5}$, assuming that the bit patterns are random. In order to increase the number of situations that can be used for determining the correct equalization, one could detect the situations where the digital read-out signal includes the following arrays of three bits (0, 0, 1) and (1, 0, 0) separately. The probability of occurrence of those arrays of bits is higher, $2^{-3}$ for each array. The central sample in the array of three samples of the sampled signal that corresponds to one of the above two arrays of three bits in the digital output signal should now be used for determining the correct equalization. The value of the central sample in the array of three samples that corresponds to the (0, 0, 1) bit array and the value of the central sample in the array of samples that corresponds to the (1, 0, 0) bit array can be used as the samples $a(t=-\tau)$ and $a(t=\tau)$ respectively in the table of figure 3.

It should be noted here, that the sequence with the two zeroes before or after the '1' bit is an optimum sequence. Longer sequences with more than two '0' bits before or after the '1' bit can also be used as a detection criterion. The probability of occurrence of such sequences is however lower, the longer the sequences are, so that it lasts longer before the correct setting of the variable equalizer has been obtained. Shorter sequences, such as the sequences (0,1), (0,-1), (1,0) and (-1,0), might in some circumstances also be useful as selection criterion, because they include the longer sequences given above.

A number of further embodiments of the arrangement of figure 1, for realizing a Nyquist 1 read-out will be further explained with reference to the figures 5 to 11 inclusive.

Figure 5 shows an embodiment of the arrangement as per figure 1, for reproducing a digital signal from a track on a record carrier, which shows a further elaboration of the equalizer control section 13. The embodiment comprises a read means including a read head 1, which can be a stationary head, or a head accommodated on a rotating drum. An output 2 of the read means is coupled via the preamplifier 3 and the pre-equalizer 4 to an input of the variable equalizer 5. The equalizer 5 is adapted to equalize the signal applied to its input as regards magnitude and phase (or delay) as a function of frequency, in response to control signals applied to control inputs 6 and 7. The equalized signal is applied to the output 8. The output signal of the equalizer 5, which is an analog signal, is applied to an input 9 of detector means 10. The detector means 10 can be in the form of a Viterbi detector. The detector means 10 comprise two sections, a section 10a and a section 10b. A sampling frequency signal is derived in detector section 10a using a phase locked loop (not shown) included in the detector section 10a, which phase locked loop receives to that purpose eg. the output signal of the variable equalizer 5. The analog signal supplied to the input 9 of detector section 10a is sampled with said sampling frequency so as to obtain sampled values. Said sampled values are compared in a comparator (not shown) with a positive and a negative threshold level. Samples exceeding the positive threshold level are the '1' bits, samples exceeding the negative threshold level are the '-1' bits and sampled values not exceeding both threshold values are the '0' bits. This results in a three valued bitstream of bits occurring at the sampling instants ..., $-3\tau$, $-2\tau$, $-\tau$, $0$, $\tau$, $2\tau$, $3\tau$, .... The detector section 10b includes a rectifier (not shown) so as to rectify the '-1' bits, leading to '1' bits in the bitstream. The bitstream thus obtained is applied to the output terminal 12 of the arrangement.

The output of the detector section 10a is coupled to an input of a selector 14a for selecting arrays of bits (0,0,1,0,0) and (0,0,-1,0,0) in the non-rectified output signal of the detector 10a. The detector 14a to that purpose comprises selector stages 15c and 15d respectively for selecting the (0,0,1,0,0) and (0,0,-1,0,0) bit sequences respectively. Outputs of the stages 15c and 15d are coupled to an OR-gate 17. An output of the OR-gate 17 is coupled to outputs 18 and 20 of the array selector 14a. The bit array selector 14a generates selection signals at the outputs 18 and 20 when either a (0,0,1,0,0) or a (0,0,-1,0,0) bitsequence has been detected by the selector stages 15c and 15d respectively. When a selection signal occurs, the analog signal that led to the (0,0,1,0,0) or the (0,0,-1,0,0) bitsequence in the non-rectified bitstream present at the output of detector 10a is sampled exactly at the time instant corresponding to the time instant of occurrence of the (zero) bit directly adjoining the '1' or '-1' bit at its left and its right side in the (0,0,1,0,0) and (0,0,-1,0,0) bitsequence respectively.

The output 8 of the variable equalizer 5 is coupled via a first delay unit 30 to a signal input 34 of the sample-and-hold unit 26, and via a second delay unit 32 to a signal input 36 of the sample-and-hold unit 28. Outputs 38 and 40 of the sample-and-hold units 26 and 28 are coupled to inputs 42 and 44 respectively of an equalizer control signal generator 45. The output 18 of the selector 14a is coupled to a control input of the sample-and-hold unit 26. The output 20 of the selector 14a is coupled to a control input of the sample-and-hold unit 28.

Upon the receipt of a selection signal from the selector 14a applied to a sample-and-hold unit, this unit samples the analog signal applied to its signal input and holds the value of the sample during a certain time interval, so as to supply this value to one of the inputs of the equalizer control signal generator 45.

The delay units 30 and 32 delay the signals applied to its inputs over a time interval of $T_1$ and $T_2$ respectively. The delay interval $T_1$ has been chosen such that, when a selection signal occurs at the output 18 of the selection unit 14a, the analog signal that lead to the (0,0,1,0,0) or the (0,0,-1,0,0) bitsequence in the non-rectified bitstream present at the output 11 of the detection stage 10a is sampled exactly at the time instant corresponding to the time instant of occurrence of the second bit in the (0,0,1,0,0) or the (0,0,-1,0,0) bitsequence.

From what has been explained with reference to figure 2, it can be concluded that, if the equalizer 5 is set such that the intersymbol interference is zero and if the sampling instants are located in time such that one sampling instant is exactly at the location of the time of occurrence of the maximum value of the response function of figure 2b, the sample value of said sample of the analog signal sampled by the sample-and-hold 26 will have a zero amplitude. For an incorrect setting of the equalizer 5, this value will be non-zero.

The delay interval $T_2$ has been chosen such that, when a detection signal occurs at the output 20 of the selection unit 14a, the analog signal that lead to the (0,0,1,0,0) or the (0,0,-1,0,0) bitsequence in the non-rectified bitstream present at the output of the detector stage 10a is sampled exactly at the time instant corresponding to the time instant of occurrence of the fourth bit in the (0,0,1,0,0) or the (0,0,-1,0,0) bitsequence.

Again from what has been explained with reference to figure 2, it can be concluded that, if the equalizer 5 is set to its correct value, the sample value of the sample of the analog signal obtained in the sample-and-hold circuit 28 will have a zero amplitude. For an incorrect setting of the equalizer 5, this value will be non-zero.

It should however be noted that it might be necessary in some applications to sample the analog signal at time instants lying a little bit further than one bittime T away from the time instant of occurrence of the maximum amplitude in the impulse response.

The sample values sl and $s_2$ derived in the sample-and-hold circuits 26 and 28 correspond in fact to the samples $a(t=-\tau)$ and $a(t=\tau)$ respectively in the table of figure 3. The sample values are applied to the equalizer control signal generator 45. This generator 45 generates a first control signal which has a relation to the sum of the sample values $s_1$ and $s_2$, which first control signal $c_1$ is applied to the output 46. More specifically it can be said that the first control signal is proportional to the sum of both sample values. The generator 45 further generates a second control signal $c_2$ which has a relation to the difference, such as $s_1 - s_2$, between both sample values. More specifically, this second control signal is proportional to the difference between both sample values.

In order to discriminate between positive going signal transitions and negative going transitions, the output of the selector stage 15c is coupled to an input 39a of the generator 45. Further, the output of the selector stage 15d is coupled to an input 39b of the generator 45. Upon detection of a positive going transition, a signal is applied to the input 39a of the generator 45, so that the generator 45 generates first and second control signals which satisfy: $c_1 = s_1 + s_2$, and $c_2 = s_1 - s_2$ respectively. Upon detection of a negative going transition, a signal is applied to the input 39b, so that, the generator 45 generates first and second control signals which satisfy: $c_1 = -(s_1 + s_2)$ and $c_2 = -(s_1 - s_2)$ respectively

The first and second control signals thus obtained are applied to control inputs 6 and 7 respectively of the variable equalizer 5, via integrating elements $I_1$ and $I_2$. Under the influence of the output signal of the integrating element $I_1$ which is applied to the input 6, the equalizer is controlled as regards its magnitude response as a function of frequency such that the first control signal becomes substantially zero. That means that, in the case that the first control signal is positive, the high frequency emphasis is increased (that is: the magnitude of the equalizer characteristic in the high(er) frequency range is increased, or, the magnitude of the equalizer characteristic in the low(er) frequency range is decreased), and in the case that the first control signal is negative, the high frequency emphasis is decreased (that is: the magnitude of the equalizer characteristic in the high(er) frequency range is decreased, or, the magnitude of the equalizer characteristic in the low(er) frequency range is increased).

Under the influence of the output signal of the integrating element $I_2$ which is applied to the input 7, the equalizer is controlled as regards its phase response (delay) as a function of frequency, such that the second control signal becomes substantially zero. That means that, in the case that the second control signal is positive (that is: $D_h - D_l$ is positive), the delay in the high(er) frequency range is decreased, or the delay in the low(er) frequency range is increased, and in the case that the second control signal is negative (that is: $D_h - D_l$ is negative), the delay in the high(er) frequency range is increased, or the delay in the low(er) frequency range is decreased.

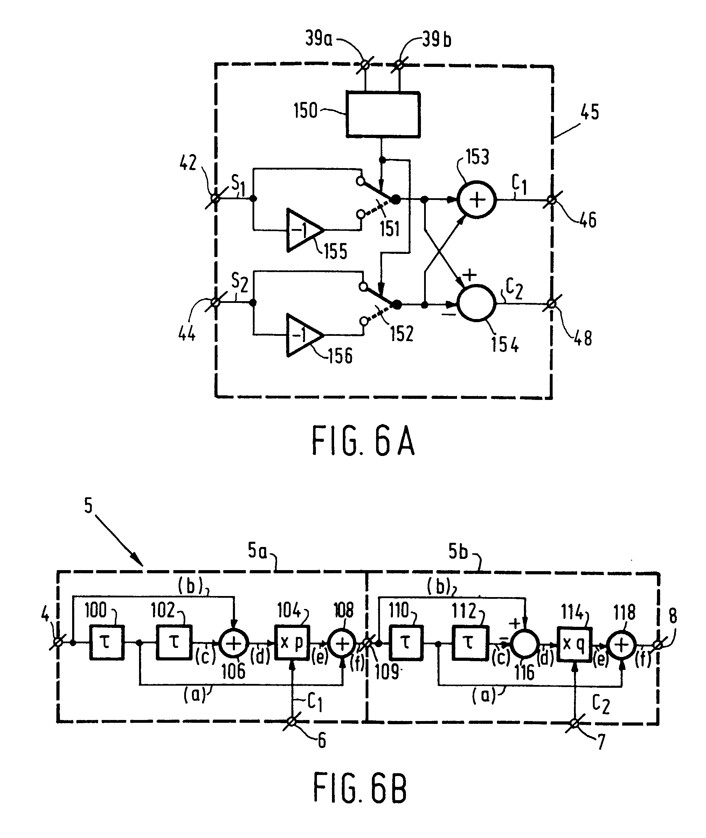

Figure 6A shows an embodiment of the control signal generator 45 of figure 5. The generator 45 comprises two inverting elements 155 and 156, two switches 151 and 152, two signal combination units 153 and 154 and a switching signal generator 150. The signal combination unit 153 functions as an adder and the combination unit 154 functions as a subtractor. If a selection signal is applied to the input 39a, the switching signal generator 150 generates a signal such that the switches 151 and 152 are in their upper positions, as shown. Output signals $c_1$ and $c_2$ occur at the outputs 46 and 48 respectively which equal $s_1 + s_2$ and $s_1 - s_2$ respectively. If a selection signal is applied to the input 39b, the switching signal generator 150 generates a signal at its output such that the switches 151 and 152 are in the lower positions. Now, output signals $c_1$ and $c_2$ occur at the outputs 46 and 48 respectively which equal $-(s_1 + s_2)$ and $-(s_1 - s_2)$ respectively.

An embodiment of the equalizer 5 capable of carrying out such control under the influence of the output signals of the integrating elements $I_1$ and $I_2$ will be explained hereinafter.

Figure 6B shows an embodiment of the variable equalizer 5, having a first equalizer section 5a for realizing an equalization as to magnitude, and a second section 5b for realizing an equalization as to phase. The section 5a receives the output signal of the integrating element $I_1$ via the control signal input 6. The section 5b receives the output signal of the integrating element $I_2$ via the control signal input 7. The section 5a comprises a series arrangement of delay lines 100 and 102, a signal combination unit 106 in the form of a signal adder, a multiplication unit 104 and a signal combination unit 108 in the form of a signal adder. The delay units 100 and 102 delay the signal applied to its inputs by the time interval $\tau$. The input 4 is coupled to a second input of the signal adder 106 and the output of the delay line 100 is coupled to a second input of the adder 108. The multiplication unit 104 multiplies the output signal of the adder 106 by a factor p. The control signal input 6 is coupled to a control input of the multiplication unit 104, so as to control the multiplication factor p in response to the output signal of the integrating element $I_1$.

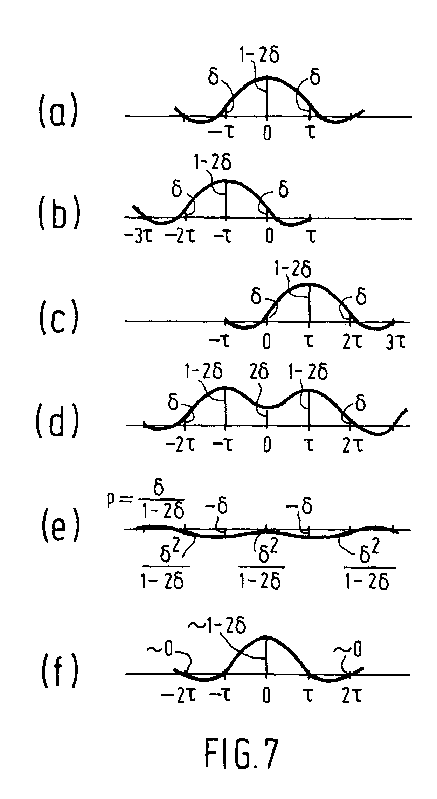

Figure 7 shows the functioning of the section 5a on the analog response signal of figure 2d. This response signal is also given in figure 7a and shows the Nyquist 1 shaped pulse which is too wide. This results in non-zero, that is positive, signal amplitudes at the time instants $t=-\tau$ and $t=\tau$ of $\delta$, and an amplitude of $1-2\delta$ at time instant $t=0$. The signal in figure 7a is the output signal of the first delay line 100, which is applied to the second input of the adder 108. The signal of figure 7b is the response signal of figure 7a as it was received a time interval $\tau$ earlier at the input 4. This signal is applied to the second input of the adder 106. The signal of figure 7c is the signal of figure 7a, delayed by a time interval $\tau$, present at the output of the delay line 102, which signal is applied to the first input of the adder 106. Figure 7d shows the output signal of the adder 106. The signal of figure 7d has signal values of $\delta$, $1-2\delta$, $2\delta$, $1-2\delta$ and $\delta$ at the time instants $(t=)$ $-2\tau$, $-\tau$, 0, $\tau$ and $2\tau$ respectively. In response to the output signal of the integrating element $I_1$, the multiplier 104 multiplies the signal of figure 7d with a factor of $-2\delta/(1-2\delta)$, which results in signal values of $-\delta^2/(1-2\delta)$, $-\delta$, $-2\delta^2/(1-2\delta)$, $-\delta$ and $-\delta^2/(1-2\delta)$ at the time instants $(t=)$ $-2\tau$, $-\tau$, 0, $\tau$ and $2\tau$ respectively. The signal values including the factor $\delta^2$ will be disregarded again, as $\delta$ is considered small in relation to the value 1. Figure 7f shows the output signal of the adder 108. As can be seen in figure 7f, the signal values at the time instants $(t=)$ $-2\tau$, $-\tau$, 0, $\tau$ and $2\tau$ are $\sim 0$, 0, $\sim(1-2\delta)$, 0 and $\sim 0$ respectively. The result is a symmetric response with signal values of zero for the time instants $t=-\tau$ and $t=\tau$.

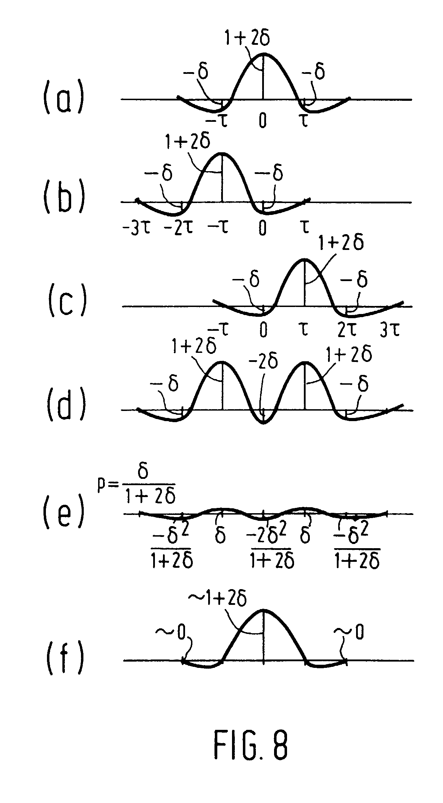

Figure 8 shows how the section 5a processes a response signal as given in figure 8a, which corresponds with the situation as described with reference to figure 2f. The pulse width is too small so that negative amplitudes exist at the time instants $t=-\tau$ and $t=\tau$. Figure 8b and 8c show the signals present at the two inputs of the adder 106. Figure 8d shows the corresponding output signal of the adder 106. Under the influence of the output signal of the integrating element $I_1$, the multiplier now realizes a multiplication by a factor of $\delta/(1+2\delta)$, so the signal of figure 8e appears at its output. This signal has amplitudes of $-\delta^2/(1+2\delta)$, $\delta$, $-2\delta^2/(1+2\delta)$, $\delta$ and $-\delta^2/(1+2\delta)$ at the time instants $(t=)$ $-2\tau$, $-\tau$, 0, $\tau$ and $2\tau$ respectively. The signal values including the factor $\delta^2$ will be disregarded again, as $\delta$ is considered small in relation to the value 1. Figure 8f shows the output signal of the adder 108. As can be seen in figure 8f, the signal values at the time instants $(t=)$ $-2\tau$, $-\tau$, 0, $\tau$ and $2\tau$ are $\sim 0$, 0, $\sim(1+2\delta)$, 0 and $\sim 0$ respectively. The result is a symmetric response with signal values of zero for the time instants $t=-\tau$ and $t=\tau$.

The second section 5b in figure 6 which realizes the equalization as to phase, receives the output signal of the integrating element $I_2$ via the control signal input 7. The section 5b comprises a series arrangement of delay lines 110 and 112, a signal combination unit 116 in the form of a signal subtractor, a multiplication unit 114 and a signal combination unit 118 in the form of a signal adder. The delay units 110 and 112 delay the signal applied to its inputs by the time interval $\tau$. The output of section 5a, which is the input 109 of the section 5b, is coupled to a second input of the signal subtractor 116 and the output of the delay line 110 is coupled to a second input of the adder 118. The multiplication unit 114 multiplies the output signal of the subtractor 116 by a factor q. The control signal input 7 is coupled to a control input of the multiplication unit 114, so as to control the multiplication factor q in response to the output signal of the integrating element $I_2$

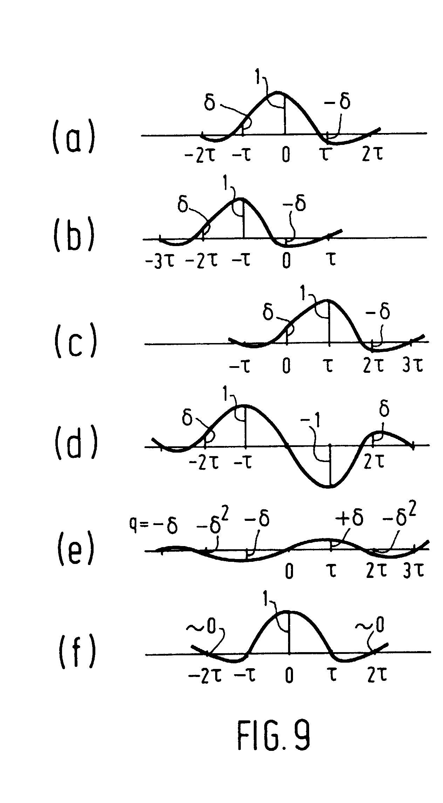

Figure 9 shows the functioning of the section 5b on the analog response signal of figure 9a. This response signal corresponds to the situation described with reference to figure 2g, and shows the Nyquist 1 shaped pulse which is asymmetric. This results in non-zero signal amplitudes at the time instants $t=-\tau$ and $t=\tau$ of $\delta$ and $-\delta$ respectively, and an amplitude of 1 at time instant $t=0$. The signal in figure 9a is the output signal of the first delay line 110, which is applied to the second input of the adder 118. The signal of figure 9b is the response signal of figure 9a as it was received a time interval $\tau$ earlier at the input 109. This signal is applied to the second input of the subtractor 116. The signal of figure 9c is the signal of figure 9a, delayed by a time interval $\tau$, present at the output of the delay line 112, which signal is applied to the first input of the subtractor 116. Figure 9d shows the output signal of the subtractor 116. The signal of figure 9d has signal values of $\delta$, 1, 0, -1 and $\delta$ at the time instants $(t=)$ $-2\tau$, $-\tau$, 0, $\tau$ and $2\tau$ respectively. In response to the output signal of the integrating element $I_2$, the multiplier 114 multiplies the signal of figure 9d with a factor of $-\delta$, which results in signal values of $-\delta^2$, $-\delta$, 0, $+\delta$ and $-\delta^2$ at the time instants $(t=)$ $-2\tau$, $-\tau$, 0, $\tau$ and $2\tau$ respectively. The signal values including the factor $\delta^2$ will be disregarded again, as $\delta$ is considered small in relation to the value 1. Figure 9f shows the output signal of the adder 118. As can be seen in figure 9f, the signal values at the time instants $(t=)$ $-2\tau$, $-\tau$, 0, $\tau$ and $2\tau$ are $\sim 0$, 0, 1, 0 and $\sim 0$ respectively. The result is a symmetric response with signal values of zero for the time instants $t=-\tau$ and $t=\tau$.

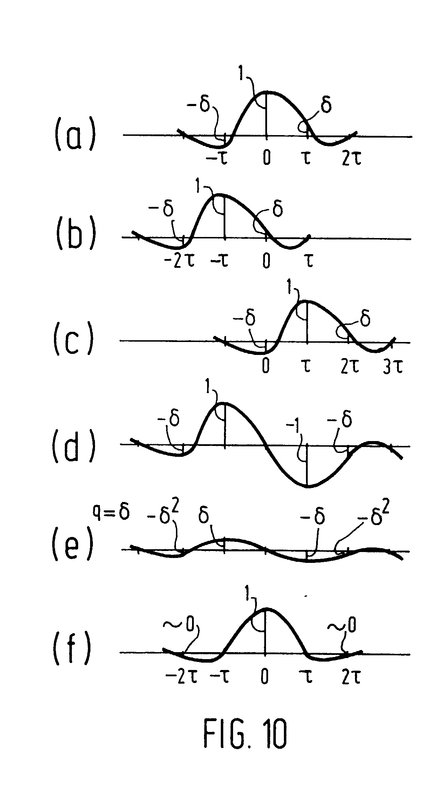

Figure 10 shows how the section 5b processes a response signal as given in figure 8b, which corresponds with the situation as described with reference to figure 2i. The response is asymmetric so that non-zero amplitudes of $-\delta$ and $\delta$ exist at the time instants $t=-\tau$ and $t=\tau$ respectively. From an extensive description of this signal processing will be refrained, as this signal processing is analogous to the signal processing as per figure 9. The difference is that in this case the output signal of the integrating element $I_2$ realizes an amplification factor q which is equal to $\delta$ in the multiplier 114. As a result a symmetric response with signal values of zero for the time instants $t=-\tau$ and $t=\tau$ is obtained at the output 8.

The equalizer adaptation method described above is in the form of a feedback system, and has a control loop so as to control the equalizer response. The method has a number of advantages.

1. Variations in the amplitude of the signal applied to the detector section 10a do not influence the zero crossings in this signal. Therefore, the control signals applied to the variable equalizer 5 remain constant.

2. No training sequences are needed, because useful data patterns are selected from regular data detected.

3. Detection and selection of the required data patterns is already possible when starting with a significant misalignment of the variable equalizer 5. This because of the fact that selected flux transitions are not influenced by neighbouring transitions. Thus proper selection tolerates a large deviation from the response that is strived for, namely a response without intersymbol interference.

4. The integrating behaviour of the control loop realizes a summation of the results obtained when detecting subsequent arrays of (0,0,1,0,0) and (0,0,-1,0,0), which leads to a suppression of the influence of a DC component or low frequency components, if present, in the signal applied to the detector section 10a.

It should be noted here that the invention has been explained for situations where either the response to a transition in the write current is affected by a too low (or a too) high HF pre-emphasis, or where the response is affected by a non constant delay as a function of frequency. It is submitted here that both phenomena, that is the occurrence of an incorrect HF pre-emphasis and the occurrence of a non-constant delay as a function of frequency, can simultaneously affect an impulse response. The sample values $a(t=-\tau)$ and $a(t=\tau)$ are now built up of two contributions, one originating from the incorrect pre-emphasis and one originating from the incorrect delay.

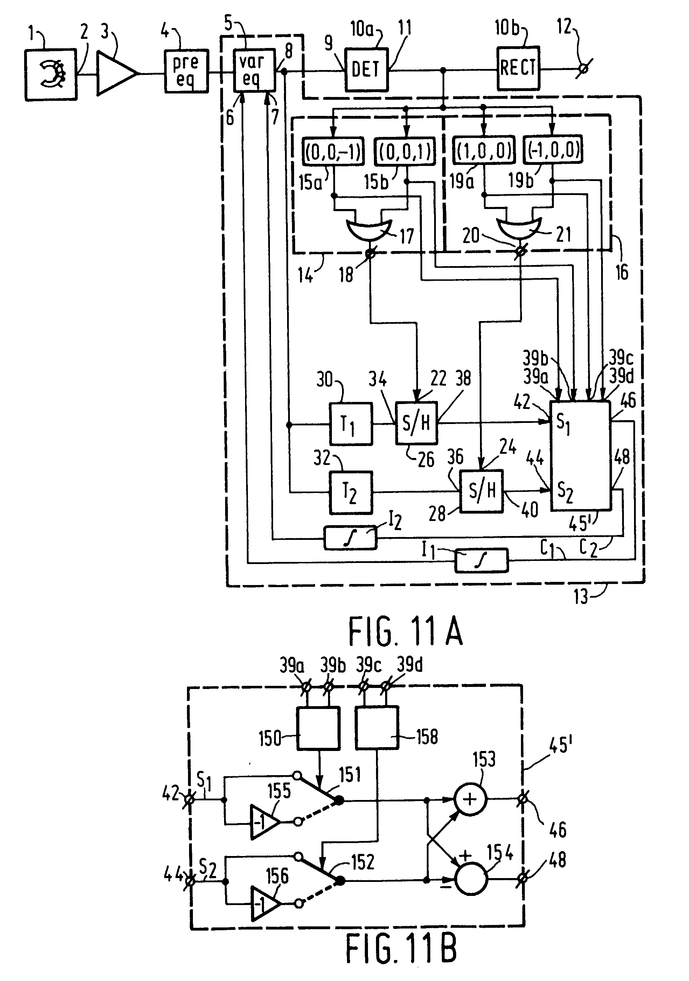

Figure 11A discloses a slightly different version of the arrangement of figure 5, in that the arrangement comprises a bit array selector 14 for selecting arrays of bits (0,0,-1), (0,0,1), (1,0,0) and (-1,0,0). This selection criterion has the advantage of a higher probability of occurrence of the various bit arrays.

The output 11 of the detection section 10a is coupled to inputs of a first bit array selector 14 and a second bit array selector 16. The bit array selector 14 supplies a first selection signal at an output 18 if an array of bits (0, 0,-1) or an array of bits (0,0,1) is selected in the non-rectified bitstream present at the output 11. To that purpose, the selector 14 comprises selector stages 15a and 15b for selecting the arrays (0,0,-1) and (0,0,1) respectively. Outputs of the stages 15a and 15b are coupled to the output 18 via an OR-gate 17. The bit array selector 16 supplies a second selection signal at an output 20 if an array of bits (1, 0, 0) or an array of bits (-1,0,0) is selected in the non-rectified bitstream present at the output 11. To that purpose, the selector 16 comprises selector stages 19a and 19b for selecting the arrays (1,0,0) and (-1,0,0) respectively. Outputs of the stages 19a and 19b are coupled to the output 20 via an OR-gate 21. The first and second selection signals are applied to control inputs 22 and 24 respectively of the sample-and-hold units 26 and 28 respectively.

Upon the receipt of a selection signal applied to a sample-and-hold unit, this unit samples the analog signal applied to its signal input and holds the value of the sample during a certain time interval, so as to supply this value to one of the inputs of the equalizer control signal generator 45.

The delay units 30 and 32 delay the signals applied to its inputs over a time interval of $T_1$ and $T_2$ respectively. The delay interval $T_1$ has been chosen such that, when a selection signal occurs at the output 18 of the selection unit 14, the analog signal that lead to the (0,0,1) or the (0,0,-1) bitsequence in the non-rectified bitstream present at the output 11 of the detector stage 10a is sampled exactly at the time instant corresponding to the time instant of occurrence of the central (zero) bit in the (0,0,1) or the (0,0,-1) bitsequence.

From what has been explained with reference to figure 2, it can be concluded that, if the equalizer 5 is set such that the intersymbol interference is zero and if the sampling instants are located in time such that one sampling instant is exactly at the location of the time of occurrence of the maximum value of the response function of figure 2b, the sample of the analog signal will have a zero amplitude. For an incorrect setting of the equalizer 5, this value will be non-zero.

The delay interval $T_2$ has been chosen such that, when a selection signal occurs at the output 20 of the selection unit 16, the analog signal that lead to the (1,0,0) or the (-1,0,0) bitsequence in the non-rectified bitstream present at the output of the detector stage 10a is sampled exactly at the time instant corresponding to the time instant of occurrence of the central (zero) bit in the (1,0,0) or the (-1,0,0) bitsequence.

Again from what has been explained with reference to figure 2, it can be concluded that, if the equalizer 5 is set to its correct value, the sample of the analog signal obtained in the sample-and-hold circuit 28 will have a zero amplitude. For an incorrect setting of the equalizer 5, this value will be non-zero.

Assuming that the selection methods in the selectors 15a, 15b, 19a and 19b are equal, it can be concluded that the delays $T_1$ and $T_2$ in the delay circuits 26 and 32 equal each other. This means that the delay circuits can be replaced by one delay circuit having a delay $T_1$, coupled in the common part of the electrical connection from the output of the equalizer means 5 to the two sample-and-hold circuits 26 and 28.

The sample values $s_1$ and $s_2$ derived in the sample-and-hold circuits 26 and 28 correspond in fact to the samples $a(t=-\tau)$ and $a(t=\tau)$ respectively in the table of figure 3. The sample values are applied to the equalizer control signal generator 45. This generator 45 generates the first and the second control signal in the following way.

In order to discriminate between positive going signal transitions and negative going transitions, the outputs of the selector stages 15b and 15b are coupled to inputs 39a and 39b respectively of the generator 45'. In the same way, the outputs of the selector stages 19a and 19b are coupled to inputs 39c and 39d of the generator 45'. Suppose that two subsequent sequences (0,0,1) and (1,0,0) are detected by the selector stages 15b and 19a. The detection of the (0,0,1) sequence results in a signal being applied to the input 39b of the generator 45'. The detection of the (1,0,0) sequence results in a signal being applied to the input 39c of the generator 45'. In response to those signals, the generator generates first and second control signals $c_1$ and $c_2$ which for instance equal $(s_1+s_2)$ and $(s_1-s_2)$ respectively.

Suppose now that two subsequent sequences (0,0,-1) and (-1,0,0) are selected by the selector stages 15a and 19b. Now signals are applied to the inputs 39a and 39d respectively of the generator 45'. In response to those signals, the generator generates first and second control signals $c_1$ and $c_2$ which in this case equal -$(s_2+s_2)$ and -$(s_1-s_2)$ respectively.

It should however be noted that a (0,0,1) bitarray need not necessarily be followed by a (1,0,0) bitarray. It is possible that it is followed by any one of the arrays (0,0,1), (1,0,0), (0,0,-1) or (-1,0,0). This results in the generator 45' being of a different construction than the generator 45 of figure 6a.

Figure 11B shows that the control signal generator 45' comprises a switching signal generator 150 having inputs coupled to the inputs 39a and 39b of the generator 45', and a switching signal generator 158 having inputs coupled to the inputs 39c and 39d of the generator 45'. Outputs of the switching signal generators 150 and 158 now control the position of the switches 151 and 152 respectively. An occurrence of a signal on the input 39a controls the switch 151 to the 'down' position, as shown. An occurrence of a signal at the input 39b controls the switch to its 'up' position.

An occurrence of a signal on the input 39c controls the switch 152 to the 'up' position, as shown. An occurrence of a signal at the input 39d controls the switch to its 'down' position.

The embodiment of figure 11A and 11B has the advantage that single bit arrays of three bits, such as the bit arrays (0,0,1) and (1,0,0), can be selected without the necessity that they should occur together in a bit array (0,0,1,0,0). The probability of occurrence of such bit arrays is larger than the occurrence of the bit array (0,0,1,0,0). Further, after each 3-bit bit array selected by one of the selectors 15a, 15b, 19a and 19b, the control signals $c_1$ and $c_2$ can be recalculated, and thus the control signals applied to the inputs 6 and 7 of the variable equalizer can be readjusted.

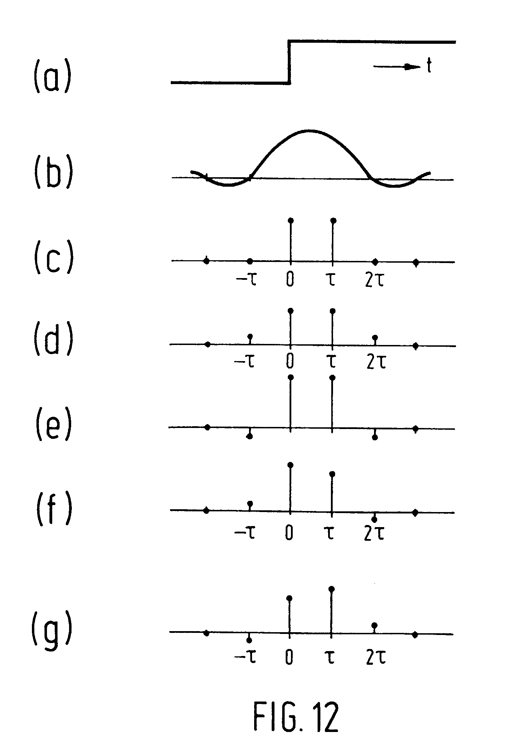

Figure 12 explains the invention for the situation that a partial response class 4 (PR4) detection is realized during read-out of a positive going transition in the write current. Figure 12a shows the positive going transition in the write current as a function of time. The write current transition of figure 12a which is recorded on the record carrier is read out by a differentiating head, shaped according to the Nyquist 1 criterion described above with reference to figure 1, and applied to a cosine filter. The shaping in accordance with the Nyquist 1 criterion is the same as the shaping described above with reference to figure 1 and 2. The combination of the Nyquist 1 shaping and the filtering by means of a cosine filter realizes a PR4 response at the input of the detector section 10a. The pre-equalizer 4 of figure 1 can be thought of now to include the cosine filter, so as to enable a PR4 detection.

The PR4 detection results, in an ideal situation, in an analog response signal at the output of the pre-equalizer 4 which is given in figure 12b. The signal given in figure 12c is a sampled version of the analog response signal, which is obtained by taking the signal values of the analog response signal at the sampling instants ..., $-\tau$, 0, $\tau$, $2\tau$, .... In the ideal case, the sampled signal obtained comprises two pulses of equal amplitude at the time instants t=0 and t=$\tau$. The samples on the other time instants have a zero amplitude. With the assumption that the amplitudes at the time instants t=0 and t=$\tau$ equal unity, the sampled signal of figure 12c can thus be expressed as (..., 0, 0, 1, 1, 0, 0, ...).

An inadequate equalization during read-out, changes the pulse width of the signal of figure 12b, which results in samples in the vicinity of the two pulses deviating from zero. Figure 12d shows this effect, when the low(er) frequencies in the output signal of the pre-equalizer 4 are over-emphasized compared to the high(er) frequencies in said output signal. The result is a positive amount of intersymbol interference at the time instants t=$-\tau$ and t=$2\tau$. The sampled signal can now be expressed as (..., $\sim$0, $\delta$, 1-$\delta$, 1-$\delta$, $\delta$, $\sim$0, ...).

Figure 12e shows a situation when the high(er) frequencies in the output signal of the pre-equalizer 4 are over-emphasized compared to the low(er) frequencies. In that case, a negative amount of intersymbol interference is present as samples that occur at the time instants t=$-\tau$ and t=$2\tau$, and which have a negative amplitude. The sampled signal can now be expressed as (..., $\sim$0, -$\delta$, 1+$\delta$, 1+$\delta$, -$\delta$, $\sim$ 0, ...).

Figure 12f shows the effect on the signal read out if the transmission in the transmission path up till the output of the pre-equalizer 4 exhibits a delay for high(er) frequencies is higher than for low(er) frequencies. The result is an asymmetric response. As will be clear from this figure, a sample of positive amplitude appears at the time instant t=$-\tau$, and a sample of negative amplitude appears at the time instant t=$2\tau$. The sampled signal can now be expressed as (..., $\sim$0, $\delta$, 1+$\delta$, 1-$\delta$, -$\delta$, $\sim$0, ...). It will be obvious that a sample of negative amplitude will appear at the time instant t=$-\tau$ and a sample of positive amplitude will appear at the time instant t=$2\tau$ in the case that the delay for high(er) frequencies is lower than for low(er) frequencies. The sampled signal can then be expressed as (..., ~0, -δ, 1-δ, 1+δ, δ, ~0, ...), see figure 12g.

From the foregoing it has become clear that, in a situation where an isolated step transition in the write current occurs, the amplitudes of the samples occurring at the time instants $t=-\tau$ and $t=2\tau$ during read-out, give an indication as to the equalization carried out. The table given in figure 3 can be used here as well, to show all the possible situations that can occur for the samples a $(t=-\tau)$ and $a(t=2\tau)$ that directly adjoin the two pulses at $t=0$ and $t=\tau$. For $a(t=\tau)$ in the table should be read a $(t=2\tau)$. The conclusions that can be derived from those situations are the same for the PR4 detection as described with reference to figure 12.

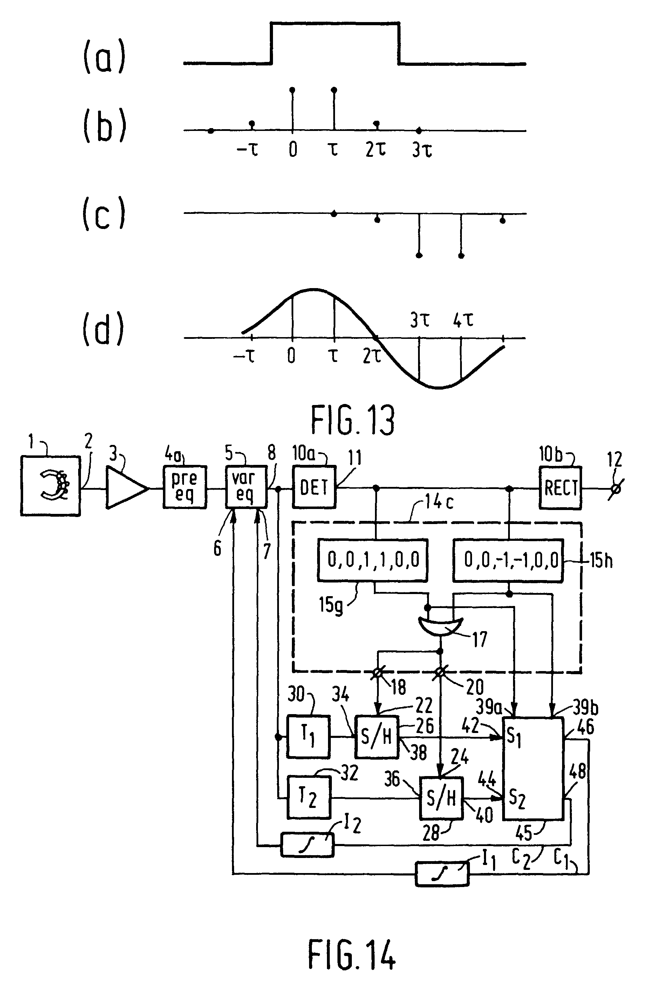

In the same way as stated above with reference to figure 4 for the Nyquist 1 detection method, also in the case of a PR4 detection method it should be noted that the conclusions given above only apply for situations where subsequent transitions in the write current occur not too close to each other, viewed in time. This can be explained with reference to figure 13.

Figure 13a shows a situation where a positive going transition and a negative going transition in the write current are spaced a time interval of $3\tau$ away. Figure 13b shows the signal read out in response to the positive going transition and figure 13c shows the signal read out in response to the negative going transition. As can be seen from those figures, the HF equalization is too low. The total response to both transitions is given as the sampled signal in figure 13d. The signal in figure 13d is the sum of the signals of figure 13b and 13c. As can be seen from figure 13d, the signal amplitude at $t=2\tau$ is zero, as the positive signal amplitude at $t=2\tau$ in figure 13b cancels the negative amplitude at $t=2\tau$ in figure 13c. Detection of the signal amplitude at $t=2\tau$ could lead to the conclusion that no intersymbol interference is present, which is in fact not the case, as is shown in figure 13b and 13c. The situation of figure 13a, where the digital write current is in the form of (..., -1, 1, 1, 1, -1, ...) is therefore less suitable for the determination of an incorrect equalization.

From the figures 12d to 12g it has become clear that the assumption is made that an incorrect equalization during read-out of a positive or negative going transition has a major influence on the signal values at the time instants $t=-\tau$ to $t=2\tau$, and that this influence can be neglected for time instants lying further away from the time instant $t=0$. This has been made clear in the figures 12d to 12 g by equalling the amplitude of the sampled signal for the time instants $-2\tau$ and $3\tau$ to zero. That means that the interaction between two subsequent transitions, as described with reference to figure 13, is considered negligible as soon as two subsequent transitions lie a time spacing of at least $4\tau$ apart. As this should also be the case for a directly preceding transition, it can therefore be concluded that a positive going transition can be used for determining the amount of equalization if the write current has the following form (..., -1, -1, -1, -1, 1, 1, 1, 1, ...), or, if the sampled signal equals (..., 0, 0, 1, 1, 0, 0, ...) in the ideal situation. In the same way, a negative going transition in the write current can be used if the digital write signal equals (..., 1, 1, 1, 1, -1, -1,-1, -1, ...), which realizes a sampled signal in the form of the array of samples (..., 0, 0, -1, -1, 0, 0, ...) in the ideal situation. The two zero-valued samples at time instants $-\tau$ and $2\tau$, that directly adjoin the samples at the time instants $t=0$ and $t=\tau$ (see figure 12c), are used for determining the correct equalization. This means that arrays of bits (0, 0, 1, 1, 0, 0) and (0, 0, -1, -1, 0, 0) in the output signal of the detector section 10a should be detected.

The probability of occurrence of such arrays of bits is rather low, namely $2^{-8}$ for each array, assuming that the bit patterns are random. That means that the probability that either the one or the other bit array occurs, is equal to $2^{-7}$. In order to increase the number of situations that can be used for determining the correct equalization, one could detect the situations where the output signal of the detector section 10a includes the following arrays of four bits: (0, 0, 1, 1), (0, 0, -1, -1), (-1, -1, 0, 0) and (1, 1, 0, 0) separately. The probability of occurrence of those arrays of samples is higher, $2^{-6}$ for each array. The probability that one of the four bit arrays occurs is thus $2^{-4}$. The second sample from the left in the array of four samples of the sampled signal that corresponds to the (0, 0, 1, 1) bit array or the (0, 0, -1, -1) bit array in the digital output signal, and the third sample from the left in the array of four samples of the sampled signal that corresponds to the (-1, -1, 0, 0) bit array or the (1, 1, 0, 0) bit array in the digital output signal, should now be used for determining whether the equalization is correct or not. The value of the second sample in the array of samples corresponding to the (0, 0, -1, -1) bit array or the (0, 0, 1, 1) bit array can be used as the sample $a(t=-\tau)$ in the table of figure 3, and the value of the third sample in the array of samples corresponding to the (-1, -1, 0, 0) bit array or the (1, 1, 0, 0) bit array can be used as the sample $a(t=\tau)$ in the table of figure 3.

The arrays of four consecutive samples, given above, are the arrays obtained after rectifying the signal read out. This means that selection means should be present to select the following arrays of samples in the non-rectified signal read out: (0, 0, 1, 1), (0, 0, -1, -1), (1, 1, 0, 0) or (-1, -1, 0, 0). If a more accurate selection is needed one could select the following arrays of (five consecutive) samples: (-1, 0, 0, 1, 1), (1, 0, 0, -1, -1), (1, 1, 0, 0, -1) or (-1, -1, 0, 0, 1). This selection criterion is especially useful in the situation where the detection means 10a includes a Viterbi detector. If either the array (-1, 0, 0, 1, 1) or the array (1, 0, 0, -1, -1) has been selected, the sample in the sampled signal that corresponds to the central bit in the two arrays can be used as the $a(t=-\tau)$ value in the table of figure 3. Further, the sample in the sampled signal that corresponds to the second bit in the two arrays can be used as the $a(t=\tau)$ value in the table of figure 3. The reason for this is that, if an array (-1, 0, 0, 1, 1) is detected, the bit directly preceding the '-1' bit in this array, is also a '-1' bit. In the same way, if an array (1, 0, 0, -1, -1) is detected, the bit directly preceding the '1' bit in this array, is also a '1' bit.

The same reasoning is valid for the arrays (1, 1, 0, 0, -1) and (-1, -1, 0, 0, 1). The sample value in the sampled signal corresponding with the central bit in both arrays can be used as the $a(t=\tau)$ value in the table of figure 3. The sample value in the sampled signal corresponding with the fourth bit in both arrays can be used as the $a(t=-\tau)$ value in the table of figure 3.

Figure 14 discloses an embodiment in which a PR4 detection is carried out on the signal read out. The arrangement largely resembles the arrangement of figure 5, with the exception that the pre-equalizer 4a has a different transmission characteristic, as the cosine filter characteristic is now included in pre-equalizer 4a and that the selection unit 14c now selects a (0,0,1,1,0,0) or a (0,0,-1,-1,0,0) bit sequence in the non-rectified output signal of the detector stage 10a. To that purpose, the selection unit 14c comprises selection stages 15g and 15h for selecting a (0,0,1,1,0,0) and a (0,0,-1,-1,0,0) bit sequence respectively, and an OR gate 17.

When a selection signal occurs at the output 18 of the selection unit 14c, the analog signal at the output of the variable equalizer 5 that lead to the (0,0,1,1,0,0) or the (0,0,-1,-1,0,0) bitsequence in the non-rectified bitstream present at the output of the detector 10a, is sampled exactly at the time instant corresponding to the time instant of occurrence of the second (zero) bit in the (0,0,1,1,0,0) or the (0,0,-1,-1,0,0) bitsequence. When the selection signal occurs at the output 20 of the selection unit 14c, the analog signal at the output of the equalizer 5 that lead to the (0,0,1,1,0,0) or the (0,0,-1,-1,0,0) bitsequence in the non-rectified bitstream present at the output 11 of the detector 10a is sampled exactly at the time instant corresponding to the time instant of occurrence of the fifth bit (which is the third zero bit) in the (0,0,1,1,0,0) or (0,0,-1,-1,0,0) bitsequence. The generation of the control signals $c_1$ and $c_2$ is the same as in the embodiment of figure 5, in the sense that again the outputs of the stages 15g and 15h are coupled to inputs 39a to 39d respectively of the generator 45, so as to obtain the first and second control signals with the correct sign, dependent of the occurrence of a positive or a negative going transition in the write current that is detected.

The variable equalizer 5 can have the same construction as the variable equalizer 5 of figure 11, that is the construction as shown in figure 6B.

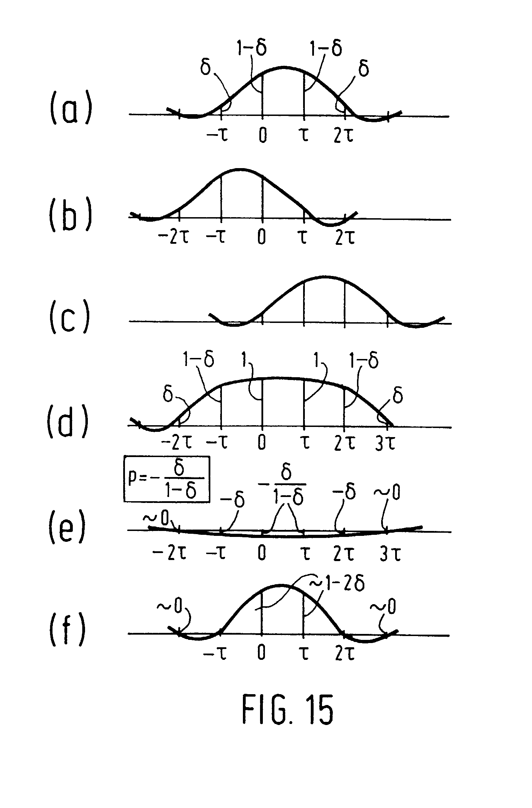

Figure 15 shows the correction of a too wide response signal, as given in figure 15a. Non-zero sample values having an amplitude $\delta$ occur at the time instants $t=-\tau$ and $t=2\tau$ and amplitudes of $1-\delta$ occur at time instants $t=0$ and $t=\tau$. The signal in figure 15a is the output signal of the first delay line 100 in the section 5a, which is applied to the second input of the adder 108. The signal of figure 15b is the response signal of figure 15a as it was received a time interval $\tau$ earlier at the input 4. This signal is applied to the second input of the adder 106. The signal of figure 15c is the signal of figure 15a, delayed by a time interval $\tau$, present at the output of the delay line 102, which signal is applied to the first input of the adder 106. Figure 15d shows the output signal of the adder 106. The signal of figure 15d has signal values of $\delta$, $1-\delta$, 1, 1, $1-\delta$ and $\delta$ at the time instants ($t=$) $-2\tau$, $-\tau$, 0, $\tau$, $2\tau$ and $3\tau$ respectively. In response to the output signal of the integrating element $I_1$, the multiplier 104 multiplies the signal of figure 15d with a factor of $-\delta/(1-\delta)$, which results in signal values of substantially zero at the time instants $t=-2\tau$ and $t=3\tau$, of $-\delta$ at the time instants $t=-\tau$ and $t=2\tau$, and of $-\delta/(1-\delta)$ at the time instants $t=0$ and $t=\tau$. $\delta$ is again considered small in relation to the value 1. Figure 15f shows the output signal of the adder 108. As can be seen in figure 15f, the signal values at the time instants ($t=$) $-2\tau$, $-\tau$, 0, $\tau$, $2\tau$ and $3\tau$ are $\sim0$, 0, $\sim(1-2\delta)$, $\sim(1-2\delta)$, 0 and $\sim0$ respectively. The result is a symmetric response with signal values of zero for the time instants $t=-\tau$ and $t=2\tau$.

When correcting, by means of the section 5a, a too narrow response, which means that the signal values at the time instants $t=-\tau$ and $t=2\tau$ are negative and equal $-\delta$, see figure 12e, the output signal of the integrating element $I_1$ controls the multiplier such that the signal applied to its input is multiplied by a factor $\delta/(1+\delta)$. The result is again a symmetric response with signal values of zero amplitude at the time instants $t(=)$ $-2\tau$, $-\tau$, $2\tau$ and $3\tau$, and amplitudes $\sim1$ at $t=0$ and $t=\tau$.

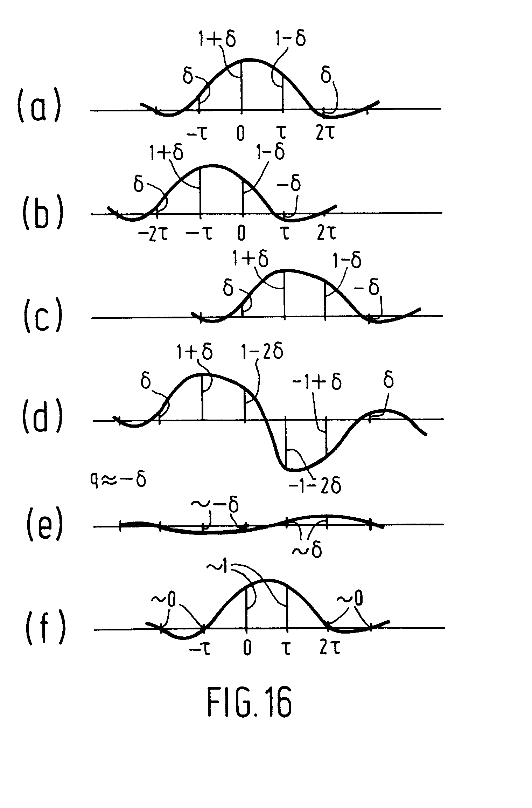

Figure 16 shows the functioning of the section 5b in figure 6B on the analog response signal of figure 16a. This response signal corresponds to the situation described with reference to figure 12f, and shows the pulse which is asymmetric. This results in non-zero signal amplitudes at the time instants $t=-\tau$ and $t=2\tau$ of $\delta$ and $-\delta$ respectively, and amplitudes of $1+\delta$ at $t=0$ and $1-\delta$ at $t=\tau$. The signal in figure 16a is the output signal of the first delay line 110 in section 5b, which is applied to the second input of the adder 118. The signal of figure 16b is the response signal of figure 16a as it was received a time interval $\tau$ earlier at the input 109. This signal is applied to the second input of the subtractor 116. The signal of figure 16c is the signal of figure 16a, delayed by a time interval $\tau$, present at the output of the delay line 112, which signal is applied to the first input of the subtractor 116. Figure 16d shows the output signal of the subtractor 116. The signal of figure 16d has signal values of $\delta$, $1+\delta$, $1-2\delta$, $-1-2\delta$, $-1+\delta$ and $\delta$ at the time instants ($t=$) $-2\tau$, $-\tau$, 0, $\tau$, $2\tau$ and $3\tau$ respectively. In response to the output signal of the integrating element $I_2$, the multiplier 114 multiplies the signal of figure 16d with a factor of approximately $-\delta$, which results in signal values of $\sim0$, $\sim-\delta$, $\sim-\delta$, $\sim+\delta$, $\sim+\delta$ and $\sim0$ at the time instants ($t=$) $-2\tau$, $-\tau$, 0, $\tau$, $2\tau$ and $3\tau$ respectively. $\delta$ is again considered small in relation to the value 1. Figure 16f shows the output signal of the adder 118. As can be seen in figure 16f, the signal values at the time instants ($t=$) $-2\tau$, $-\tau$, 0,

$\tau$, $2\tau$ and $3\tau$ are $\sim0$, $\sim0$, $\sim1$, $\sim1$, $\sim0$ and $\sim0$ respectively. The result is a symmetric response with signal values approximately zero for the time instants t=-$\tau$ and t=2$\tau$.

When correcting, by means of the section 5b, a response as per figure 12g, which means that the signal values at the time instants t=-$\tau$ and t=2$\tau$ are equal to -$\delta$ and $\delta$ respectively, the output signal of the integrating element $I_2$ controls the multiplier such that the signal applied to its input is multiplied by a factor $\delta$. The result is again a symmetric response with signal values of approximately zero amplitude at the time instants t(=) -2$\tau$, -$\tau$, 2$\tau$ and 3$\tau$, and amplitudes $\sim1$ at t=0 and t=$\tau$.

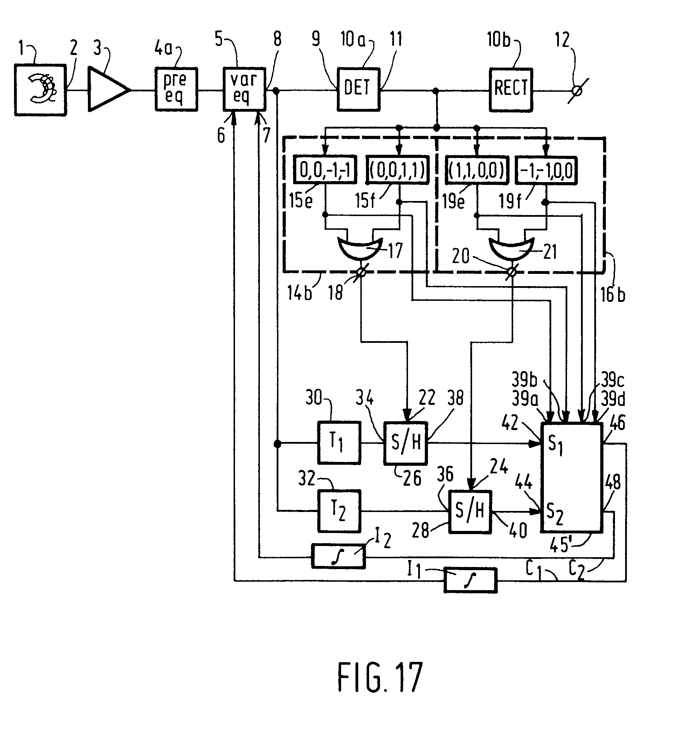

Figure 17 discloses another embodiment in which a PR4 detection is carried out on the signal read out. The arrangement largely resembles the arrangement of figure 11a, with the exception that the pre-equalizer 4a has a different transmission characteristic, as the cosine filter characteristic is now included in pre-equalizer 4a and that the selection unit 14b now selects a (0,0,1,1) or a (0,0,-1,-1) bit sequence and the selection unit 16b now selects a (1,1,0,0) or a (-1,-1,0,0) bitsequence in the non-rectified output signal of the detector stage 10a. To that purpose, the selection unit 14b comprises selection stages 15e and 15f for selecting a (0,0,-1,-1) and a (0,0,1,1) bit sequence respectively, and an OR gate 17. The selection unit 16b comprises selection stages 19e and 19f for selecting a (1,1,0,0) and a (-1,-1,0,0) bitsequence respectively and an OR gate 21.

When a selection signal occurs at the output 18 of the selection unit 14b, the analog signal at the output of the variable equalizer 5 that lead to the (0,0,1,1) or the (0,0,-1,-1) bitsequence in the non-rectified bitstream present at the output of the detector 10a is sampled exactly at the time instant corresponding to the time instant of occurrence of the second (zero) bit in the (0,0,1,1) or the (0,0,-1,-1) bitsequence. When a selection signal occurs at the output 20 of the selection unit 16b, the analog signal at the output of the equalizer 5 that lead to the (1,1,0,0) or the (-1,-1,0,0) bitsequence in the non-rectified bitstream present at the output 11 of the detector 10a is sampled exactly at the time instant corresponding to the time instant of occurrence of the third bit (which is the first zero bit) in the (1,1,0,0) or (-1,-1,0,0) bitsequence. The generation of the control signals $c_1$ and $c_2$ is the same as in the embodiment of figure 11a, in the sense that again the outputs of the stages 15e, 15f, 19e and 19f are coupled to inputs 39a to 39d respectively of the generator 45', so as to obtain the first and second control signals with the correct sign, dependent of the occurrence of a positive or a negative going transition in the write current that is detected.

As has been said previously, the embodiment of figure 14 is less useful, in that the probability of occurrence of the selected bit arrays is much lower than in the embodiment of figure 17.

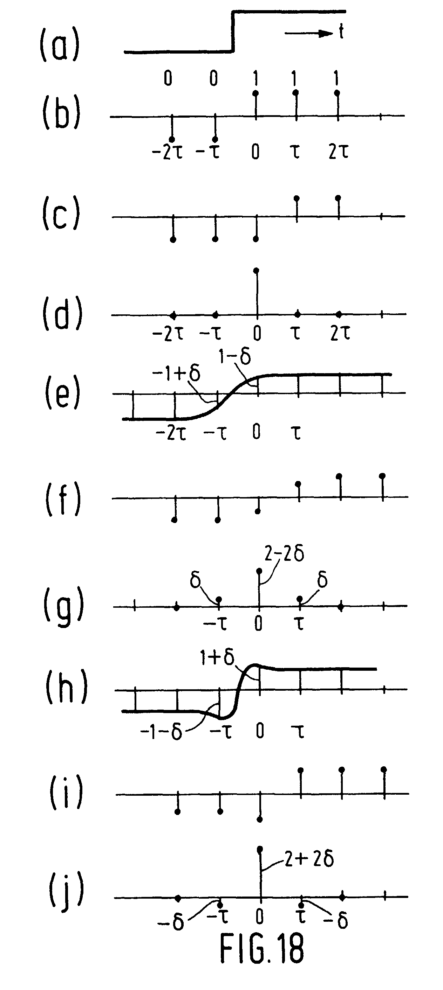

The invention is equally well applicable in a full response detection system. Figure 18 shows how a positive going step transition in the write current is detected. Figure 18a shows the positive going step transition. Detection takes place by means of sampling the analog read-out signal. This leads in the ideal situation to the sampled signal given in figure 18b. Negative samples occur at the time instants prior to t=0, and positive samples occur at time instants t= 0, $\tau$, 2$\tau$, ..... Figure 18b also shows the digital signal, which is the bit sequence ..., 0, 0, 1, 1, 1, ... at the sampling instants t= ..., -2$\tau$, -$\tau$, 0, $\tau$, 2$\tau$, ..., obtained after detection in a bitdetector.

Carrying out a (1-D) operation on the read-out signal, means delaying the readout signal by t=$\tau$ and subtracting the delayed signal from the non-delayed signal. The (1-D) operation results in a signal that would have been obtained if the signal recorded in the record carrier would have been read out by means of a Nyquist 1 detection method. This will be explained with reference to figures 18b, 18c and 18d. Figure 18c shows to that purpose the signal of figure 18b delayed by t=$\tau$, and figure 18d shows the result of subtracting the signal of figure 18c from the signal of figure 18b. The signal of figure 18d equals the signal of figure 2c, which is the response obtained when having a Nyquist 1 detection system.

An inadequate equalization during read-out changes the step transition, in the sense that, if the low frequencies are over-emphasized, the transition will be more gradual. This is schematically shown in figure 18e, which shows the analog signal as it is read out, and the values of the said signal at the sampling moments. The signal values at t=-$\tau$ and t=0 now equal $\delta$ and 1-$\delta$ respectively. Figure 18f shows the signal of figure 18e delayed by $\tau$, and figure 18g shows the result of subtracting both signals. The signal obtained in figure 18g equals the signal of figure 2e. Non-zero sample values of $\delta$ appear at the time instants $\tau$ and -$\tau$, and the signal value at t=0 equals 2-2$\delta$.

Figure 18h shows the situation where the high frequencies are over-emphasized. The transition is now more pronounced, in that signal values of -$\delta$ and 1+$\delta$ appear at the time instants t=-$\tau$ and t=0 respectively. Figure 18i shows the signal of figure 18h delayed by $\tau$, and figure 18j shows the result of subtracting both signals. The signal obtained in figure 18j equals the signal of figure 2f. Non-zero sample values of -$\delta$ appear at the time instants $\tau$ and -$\tau$ and the signal value at t=0 equals 2+2$\delta$.

Needless to say that an alike behaviour exists in the case of the occurrence of a negative going transition in the write current. The difference lies in the fact that in both cases described above, that is: low frequencies over-emphasized and high frequencies over-emphasized, signals as in figure 18g and 18j occur having an inverse polarity.

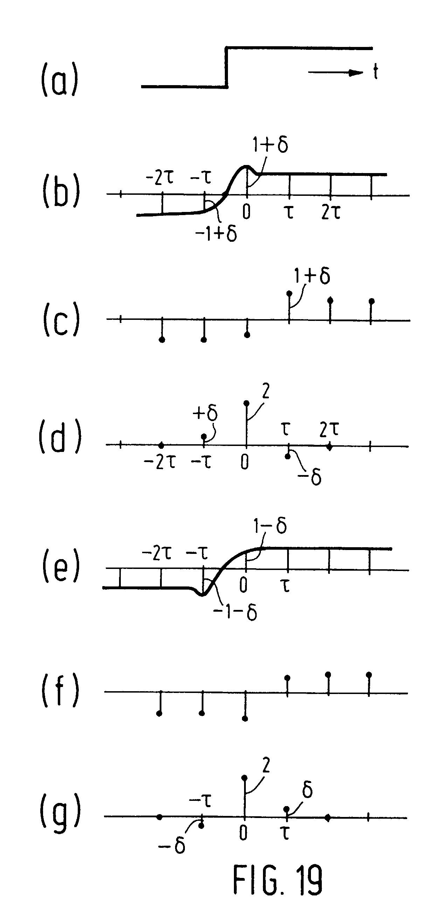

Figure 19 shows the situation where the high(er) frequencies in the operating frequency range of the transmission channel have not the same delay as the low(er) frequencies. More specifically, figure 19b shows the situation where the high(er) frequencies are delayed relatively more than the low(er) frequencies. This results in a more gradual start of the transition. The samples at the sample instants $t=-\tau$ and $t=0$ now equal $-1+\delta$ and $1+\delta$ respectively. Delaying this signal, see figure 19c, and subtracting both signals results in the signal of figure 19d. This signal equals the signal of figure 2h. Zero sample values occur for time instants smaller than $t=-\tau$ and larger than $t=\tau$. Sample values of $+\delta$ and $-\delta$ are present for $t=-\tau$ and $t=\tau$ respectively and a sample value of 2 is present for $t=0$.

Figure 19e shows the situation where the low(er) frequencies are delayed relatively more than the high(er) frequencies. This results in a more gradual end of the transition. The samples at the sample instants $t=-\tau$ and $t=0$ now equal $-1-\delta$ and $1-\delta$ respectively. Delaying this signal, see figure 19f, and subtracting both signals results in the signal of figure 19g. This signal equals the signal of figure 2j. Zero sample values occur for time instants smaller than $t=-\tau$ and larger than $t=\tau$. Sample values of $-\delta$ and $+\delta$ are present for $t=-\tau$ and $t=\tau$ respectively and a sample value of 2 is present for $t=0$.

Again, it is needless to say that an alike behaviour exists in the case of the occurrence of a negative going transition in the write current. The difference lies in the fact that in both cases described above, that is: low frequencies being delayed relatively more or less than the high frequencies, signals as in figure 19d and 19g occur having an inverse polarity.

The conclusion should be that, when applying the (1-D) operation on the signal read out, the signal obtained in the (1-D) operation can be used in the way as described above with reference to the Nyquist-1 detection method for determining the equalization carried out, and for controlling the equalization.

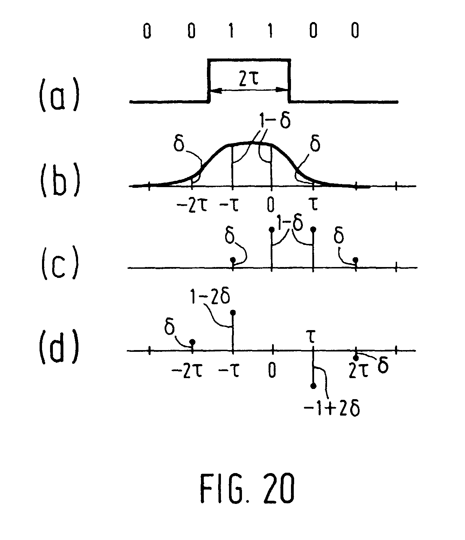

Subsequent transitions in the write current should again not occur too close to each other. Figure 20 shows in figure 20a two transitions that are spaced $2\tau$ away from each other. This signal results in the digital output signal ..., 0, 0, 1, 1, 0, 0, ... at the output terminal 12. Figure 20b shows the signal present at the input of the detector 10, in response to the signal of figure 20a that is recorded on and read out from tape. It should be noted here that the equalization is not correct, in that the low frequencies are over-emphasized. This results in values for the analog signal applied to the detector of $\delta$, $1-\delta$, $1-\delta$ and $\delta$ for the time instants $t= -2\tau$, $-\tau$, 0 and $\tau$ respectively. Figure 20c shows the signal of figure 20b delayed by the time interval $\tau$, and figure 20d the signal of figure 20b after having carried out the (1-D) operation on the signal of figure 20b. From figure 20d it is clear that a sample value of zero exists for $t=0$. This sample value can thus not used for determining whether a correct equalization is carried out, or not.

The conclusion should be that two subsequent step transitions should be spaced at least $3\tau$ away from each other.

Thus, in order to use the sample value at $t=-\tau$ in figure 18 and 19 as the value $a(t=-\tau)$ in the table of figure 3, bit arrays of $(0,0,0,1)$ or $(1,1,1,0)$ should be detected. In order to use the sample value at $t=\tau$ in figure 18 and 19 as the values $a(t=\tau)$ in the table of figure 3, bit arrays of $(0,1,1,1)$ or $(1,0,0,0)$ should be detected.

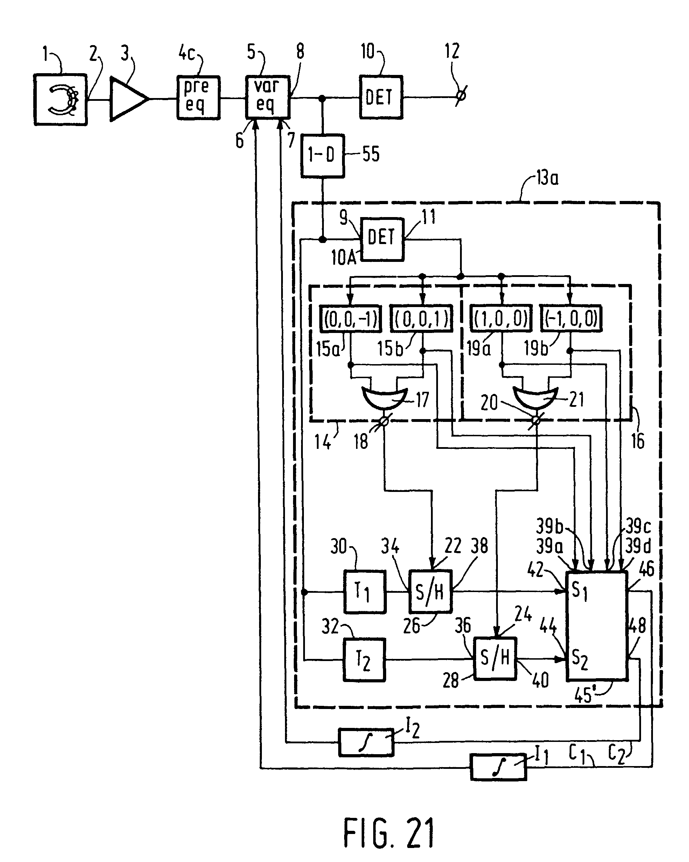

Figure 21 shows an embodiment in which a full response detection is carried out on the signal read from the track. The full response reproduction channel is formed by the elements 1, 3, 4c, 5 and 10.

Reading out of the step transition given in figure 18a thus results in the bit stream (...,0,0,1,1,1,...) at the output terminal 12, as given in figure 18b. As has been said previously, carrying out a (1-D) operation on the (analog) signal read out, which is the signal available at the output of the variable equalizer 5, leads to an signal that would have been obtained if a Nyquist-1 detection would have been carried out on the signal recorded on tape. Therefore, the arrangement includes a (1-D) operator 55 coupled to the output 8 of the variable equalizer 5. As the signal present at the output of the operator 55 is the signal obtained when carrying out a Nyquist 1 detection, the circuit 13a needed to generate the two control signals $c_1$ and $c_2$ can be coupled to the output of the operator 55. This circuit 13a can be a copy of a part of the circuit 13 of figure 11a that realizes that function. To that purpose, the output of operator 55 is coupled to the input of the detector 10a and to the inputs of the delay units 30 and 32. The functioning of the elements in the circuit 13a has been described extensively with reference to figure 11a.

It is evident that instead of the selector units 14 and 16 and the generator 45' in figure 21, the selector unit 14a and the generator 45 of figure 5 could have been used to detect the required bit sequences and to obtain the control signals $c_1$ and $c_2$.

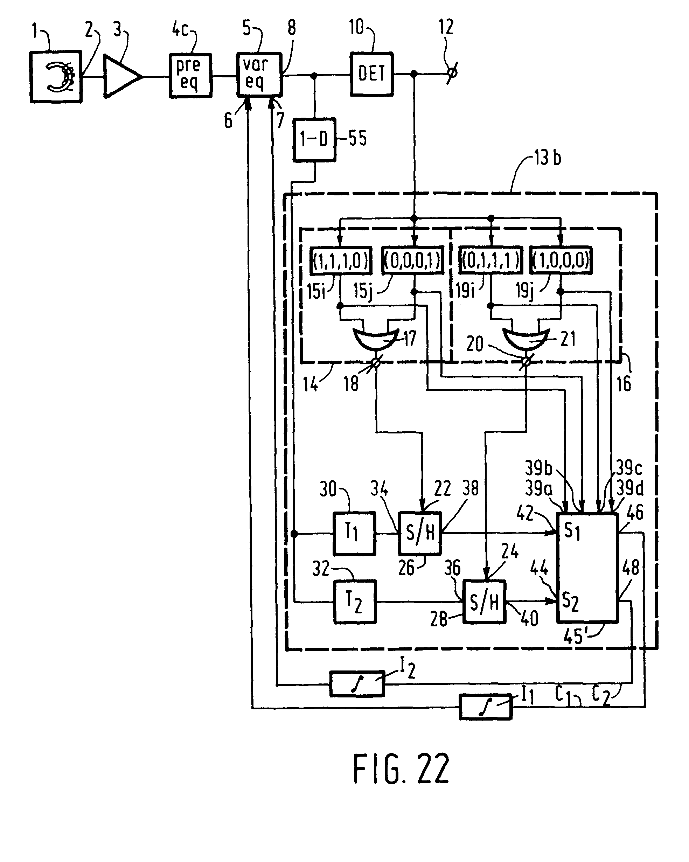

Figure 22 shows another embodiment in which a full response detection is carried out on the signal read out from tape. The selection of the required bit sequences is realized by using the digital signal available at the output terminal 12. To that purpose, the circuit 13b in figure 22 is provided with selector stages 15i, 15j, 19i and 19j for selecting the bit sequences $(1,1,1,0)$, $(0,0,0,1)$, $(0,1,1,1)$ and $(1,0,0,0)$ respectively.

When having selected the bit sequence $(0,0,0,1)$, the selector stage 15j generates a selection signal which is applied to the sample-and-hold circuit 26, via the OR-gate 17. The selection of the $(0,0,0,1)$ bit sequence means that a positive going step transition as per figure 18a has been detected. Upon receipt of the selection signal, the sample-and-hold circuit 26 samples the signal applied to its input at the time interval $t=-\tau$ in figure 18d.

When having selected the bit sequence $(1,1,1,0)$, the selector stage 15i generates a selection signal which is applied to the sample-and-hold circuit 26, via the OR-gate 17. The selection of the $(1,1,1,0)$ bit sequence means that a negative going step transition has been detected. Upon receipt of the selection signal, the sample-and-hold circuit 26 samples the signal applied to its input at the time interval $t=-\tau$ in figure 18d, assuming the transition in figure 18a would have been a negative going transition.

When having selected the bit sequence (0,1,1,1), the selector stage 19i generates a selection signal which is applied to the sample-and-hold circuit 28, via the OR-gate 21. The selection of the (0,1,1,1) bit sequence means that a positive going step transition as per figure 18a has been detected. Upon receipt of the selection signal, the sample-and-hold circuit 28 samples the signal applied to its input at the time interval $t=\tau$ in figure 18d.

When having selected the bit sequence (1,1,1,0), the selector stage 19j generates a selection signal which is applied to the sample-and-hold circuit 28 via the OR-gate 21. The selection of the (1,1,1,0) bit sequence means that a negative going step transition has been detected. Upon receipt of the selection signal, the sample-and-hold circuit 28 samples the signal applied to its input at the time interval $t=\tau$ in figure 18d.

In the same way as described with reference to figure 11a, the control signal generator 45' generates the first and second control signal $c_1$ and $c_2$ in response to the sample values applied to the inputs 42 and 44, and in response to the selection signals applied to the inputs 39a to 39d.

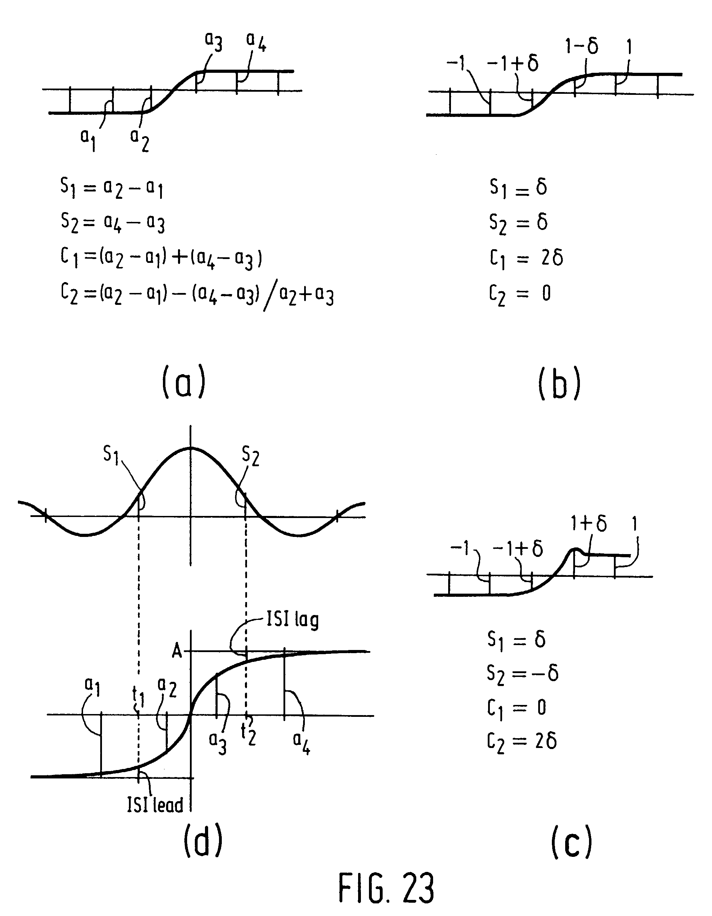

A further embodiment of a full response detection system will be described with reference to figure 23. Figure 23a shows a transition in the write current after being read out. The four subsequent signal samples in the read-out signal that adjoin the transition are denoted by $a_1$ to $a_4$. The sample value $s_1$ discussed up till now in fact equals $a_2 - a_1$, and the sample value $s_2$ discussed up till now in fact equals $a_4 - a_3$.

Consequently, the first control signal $c_1$ equals $(a_2 - a_1) + (a_4 - a_3)$ and the second control signal $c_2$ equals $(a_2 - a_1) - (a_4 - a_3)$. In the case of a negative going transition, the signs of the values for $c_1$ and $c_2$ obtained by means of the above formulae should be reversed.

It has appeared that the value for $c_2$ can be obtained in a different way, namely by means of the formula $c_2 = a_2 + a_3$. This formula can easily be obtained from the formula for $c_2$ given previously by leaving the terms $a_1$ and $a_4$ out, which is acceptable as the values for those samples can be considered equal in amplitude. Figure 23b, which show the situation of figure 18e and figure 23c, which show the situation of figure 19b, make clear that both formulae for $c_2$ give the same result.

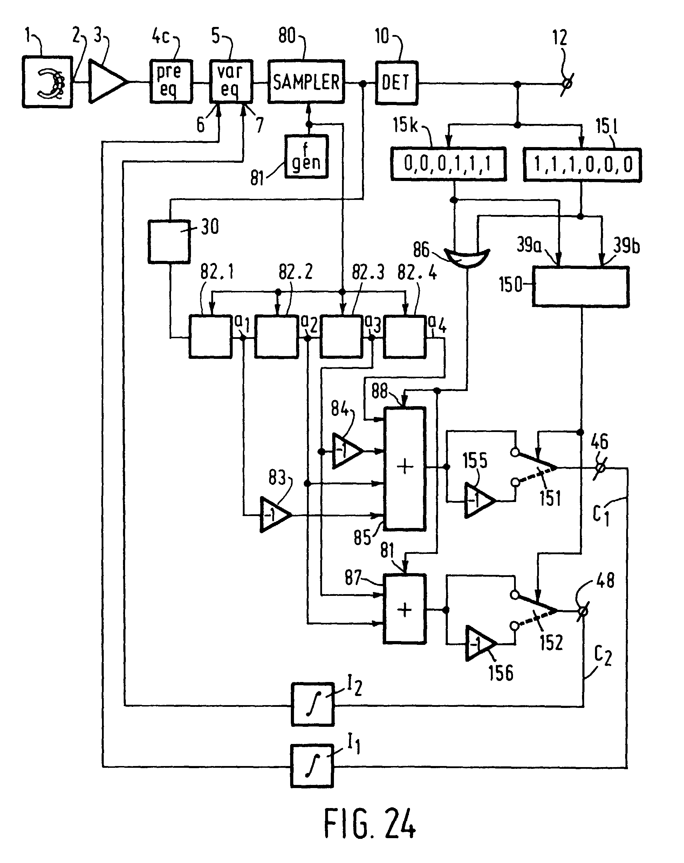

Figure 24 shows an embodiment which is based on the above knowledge. Sampler 80 coupled to the output of the variable equalizer 5 samples the analog signal so as to obtain the samples ..., $a_1$, $a_2$, $a_3$, $a_4$, ... The sampling frequency is supplied by the sampling frequency generator 81. The samples are supplied to a shift register comprising four memory stages 82.1 to 82.4, and are shifted into the shift register with the same sampling frequency supplied by the frequency generator 81. The output of the memory stage 82.1 is coupled to a first input of an adder circuit 85 via a signal inverter unit 83. The output of the memory stage 82.2 is coupled to a second input of the adder circuit 85, as well as to a first input of an adder circuit 87. The output of the memory stage 82.3 is coupled to a second input of the adder circuit 87, as well as via an inverter stage 84 to a third input of the adder circuit 85. The output of the memory stage 82.4 is coupled to a fourth input of the adder circuit 85.

Selector circuits 15k and 15l are present to select the arrays of bits (0,0,0,1,1,1) and (1,1,1,0,0,0) respectively in the output signal of the detector 10. Outputs of the selector circuits 15k and 15l are coupled to the inputs 39a and 39b respectively of the switching signal generator 150, extensively discussed with reference to figure 6a. Further, the outputs of the selection circuits 15k and 15l are coupled to an OR-gate 86, an output of which is coupled to control inputs 88 and 89 of the adder circuits 85 and 87 respectively.

As soon as the bit array (0,0,0,1,1,1) has been selected by the selector 15k, which means that the situation shown in figure 23a occurs, a selection signal is generated at the output of the selection circuit 15k. It is assumed that the delay 30 is such that the shift register 82 has the samples $a_1$ to $a_4$ of figure 23a stored in the respective memory stages 82.1 to 82.4. This selection signal is applied to the adder circuits 85 and 87 via the OR-gate 86, so as to activate an adding step in the two adding circuits. Under the influence of the selection signal applied to the control input 88, the adder circuit 85 calculates $c_1$ in accordance with the formula given in figure 23a. Under the influence of the selection signal applied to the control input 89, the adder circuit 87 calculates $c_2$ in accordance with the simplified formula given in figure 23a. Under the influence of the selection signal applied to input 39a, the switching control circuit 150 controls the switches into the positions as shown in figure 24.

In the situation of an isolated negative going transition, the selector circuit 15l will generate a selection signal, which results in the switches 151 and 152 to be switched to their 'down' positions.

A further formula for deriving the control signal $c_2$ is: $a_1 + a_2 + a_3 + a_4$. This follows more or less directly from figure 23d. The top curve in figure 23d is the impulse response, and the lower curve in figure 23d is the corresponding step response obtained in a full response detection method. Copying the method as explained previously for the impulse response curve, means that the deviation of the step response detected from an ideal step response should be determined on time instants lying half way between the sampling moments in the full response detection method. This deviation is called $ISI_{lead}$ and $ISI_{lag}$. $ISI_{lead}$ equals $A+(a_1+a_2)/2$, and $ISI_{lag}$ equals $A-(a_3+a_4)/2$, so that $c_2$ equals $ISI_{lead}-ISI_{lag}$, which is proportional to the sum of all four sample values $a_1$ to $a_4$.

It might of course be possible to sample the signal on time instants indicated by $t_1$ and $t_2$ in figure 23d so

as to obtain $c_1$ and/or $c_2$.

From the foregoing description it has become clear that the invention is based on determining the difference between an actual response in the signal received and the corresponding ideal response. This difference is a measure for the non-ideal character of the transmission channel, and can be used for deriving the two control signals for controlling a variable equalizer.

The invention, thus far described, has shown a zero-forcing equalization, in which the sample values at time instants neighbouring the time instant(s) of occurrence of the peak amplitude(s), see figure 7f, 8f, 9f and 10f for the Nyquist-1 situation and figure 15f and 16f for the partial response class IV situation, are controlled to a zero amplitude. This means that the intersymbol interference (ISI) at those time instants becomes zero.

In some cases however, it can be useful to accept a certain amount of ISI, as the detection error rate in the detected digital signal appears to be the lowest for that amount of ISI, and not for ISI equal to zero.

The equalization mechanism described previously can be used for realizing an adaptive equalization that results in a controlled ISI at the time instants in question, such that the ISI is independent of the amplitude of the neighbouring peak.

A number of examples will be given as to how the two control signals for the frequency correction and the phase correction respectively can be obtained.

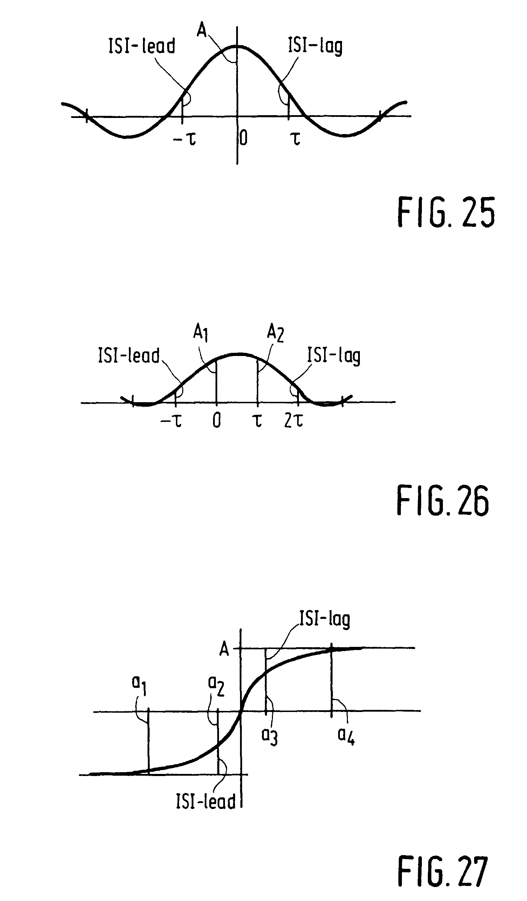

Figure 25 shows an isolated pulse obtained by a Nyquist-1 detection system. Now, not only the signal values ISI-lead and ISI-lag at the time instants $t=-\tau$ and $t=\tau$ are taken, but also the signal value A at $t=0$. The error signal for the frequency control is now as follows:

$$\text{HF-error} = (\text{ISI-lead} + \text{ISI-lag}) - b.A,$$

where b is a value of allowed intersymbol interference relative to the amplitude of the pulse. In this way a certain amount of ISI remains after equalization, as a result of a too low HF-equalization. If an additional HF-equalization is required for the remaining ISI, b should be taken negative.

Further, the error signal for the phase control is now as follows:

$$\text{phase-error} = (\text{ISI-lead} - \text{ISI-lag}) - b.A.$$

In this way, a certain amount of ISI remains after equalization, as a result of a residual phase shift.

Both error signals are applied to the integrators $I_1$ and $I_2$ so as to obtain the control signals for the variable equalizer. Further, as explained earlier, ISI-lead and ISI-lag can be determined from single (0,0,1) and (0,0,-1), and (1,0,0) and (-1,0,0) arrays respectively.

Figure 26 shows an isolated pulse obtained by a partial-response class IV detection system. Now, not only the signal values ISI-lead and ISI-lag at the time instants $t=-\tau$ and $t=2\tau$ are taken, but also the signal values $A_1$ at $t=0$ and $A_2$ at $t=\tau$. The error signal for the frequency control is now as follows:

$$\text{HF-error} = (\text{ISI-lead} - b.A_1) + (\text{ISI-lag} - b.A_2),$$

$$\text{phase-error} = (\text{ISI-lead} - b.A_1) - (\text{ISI-lag} + b.A_2)$$

Both error signals are applied to the integrators $I_1$ and $I_2$ so as to obtain the control signals for the variable equalizer.

Figure 27 shows a step transition obtained in the full-response situation. Going out from the values $a_1$ to $a_4$, the error signals can be derived as follows:

$$\text{HF-error} = (a_2 - a_1) + (a_4 - a_3) - b.(a_3 - a_2),$$

$$\text{phase-error} = (a_1 + a_2) + (a_3 + a_4) - b.(a_3 - a_2)$$

The amplitude term, characterized by the term $a_3 - a_2$, can preferably be replaced by $a_4 - a_1$, so as to obtain a better approximation for the amplitude term.

Further, preferably the error signals are normalized by dividing the error signals given above by the amplitude value.

**Claims**

1. An arrangement for receiving a digital signal from a transmission medium, the arrangement comprising

   - input means (3) for receiving a signal from the transmission medium,
   - variable equalizer means (5), having an input coupled to an output of the input means, a control signal input for receiving a control signal and an output for supplying an equalized output signal,
   - signal detector means (10a), having an input coupled to the output of the equalizer means and an output for supplying a first digital signal,
   - equalizer control signal generator means (13.1), having an output for supplying an equalizer control signal, which output is coupled to the control signal input of the equalizer means,
   - an output terminal (12) for supplying the digital signal,
   - bit array selector means (14,16), having an input coupled to the output of the signal detector means (10a) and having an output for supplying a first selection signal upon detection of at least one specified array of bits included in the signal applied to its input, characterized in that *the selector means have a further output for supplying a second selection signal upon detection of at least one other specified array of bits included in the signal applied to its input,* the bit array selector means (14,16) being adapted to select bit arrays corresponding to signal portions in the response at the output of the variable equalizer, so as to select signal portions which *are* suitable for deriving from *them* a first and a second control signal for the variable equalizer means,

- sample-and-hold means (26,28), having an input coupled to the output of the equalizer means, a control signal input (22,24) coupled to the output of the bit array selector means, and an output which is coupled to an input of the equalizer control signal generator means (45'), the sample-and-hold means being adapted to sample and hold the signal applied to its input under the influence of the first selection signal so as to obtain at least one first sample value, to sample and hold the signal applied to its input under the influence of the second selection signal so as to obtain at least one second sample value, and to supply the first and second sample values to its output, the equalizer control signal generator means being adapted to generate the first and the second control signal upon receipt of the first and second sample values, the first control signal relating to a first arithmetical combination of the first and the second sample values, the second control signal relating to a second arithmetical combination of the first and the second sample values, the first and the second arithmetical combinations being different from each other, *one of the first and second arithmetical combinations comprising an addition of the first sample value and the second sample value, the other one of the first and second arithmetical combinations comprises the step of taking the difference between said first and second sample value.* (Fig. 11A,17,21,22)

2. Arrangement as claimed in claim 1, characterized in that the at least one first sample value is taken from a lead part of *a* signal portion.

3. Arrangement as claimed in claim 1, characterized in that the at least one second sample value is taken from a lag part of *a* signal portion.

4. Arrangement as claimed in claim 1, characterized in that, the first arithmetical combination is such that the first control signal is proportional to the sum of the at least one first and second sample values.

5. Arrangement as claimed in claim 4, characterized in that, the sample-and-hold means (26,28) are adapted to sample and hold the signal applied to its input under the influence of the first selection signal so as to obtain one first sample value, to sample and hold the signal applied to its input under the influence of the second selection signal so as to obtain one second sample value, and to supply the first and second sample values to its output.

6. Arrangement as claimed in claim 5, characterized in that the second arithmetical combination is such that the second control signal is proportional to the difference between the first and the second sample value.

7. Arrangement as claimed in one of the preceding claims, characterized in that the first digital signal is a three valued digital signal and that the bit array selector means (14) are adapted to select bit arrays beginning with at least one '0'-bit and ending with at least one '1'-bit or '-1'-bit (Fig. 11A).

8. Arrangement as claimed in claim 7, characterized in that the bit array selector means (15a,15b) are adapted to select the following arrays of bits: (0,0,1) and (0,0,-1), so as to generate the first selection signal in response to the selection of one of said arrays. (Fig. 11A)

9. Arrangement as claimed in claim 7, characterized in that the bit array selector means (15e,15f) are further adapted to select the following arrays of bits: (0,0,1,1) and (0,0,-1,-1), so as to generate the first selection signal in response to the selection of one of said arrays.(Fig. 17)

10. Arrangement as claimed in any one of the claims 1 to 6, characterized in that the first digital signal is a three valued digital signal and that the bit array selector means (16) are adapted to select bit arrays beginning with at least one '1'-bit or '-1'-bit and ending with at least one '0'-bit.(Fig. 11A)

11. Arrangement as claimed in claim 10, characterized in that the bit array selector means (19a,19b) are adapted to detect the following arrays of bits: (1,0,0) and (-1,0,0), so as to generate the second selection signal in response to the selection of one of said arrays.(Fig. 11A)

12. Arrangement as claimed in claim 10, characterized in that the bit array selector means (19e,19f) are further adapted to select the following arrays of bits: (1,1,0,0) and (-1,-1,0,0), so as to generate the second selection signal in response to the selection of one of said arrays.(Fig. 17)

13. Arrangement as claimed in claim 7, 8 or 9, characterized in that the sample-and-hold means (26,28) are adapted to sample the output signal of the variable equalizer means at a time instant which corresponds to the time instant of occurrence of the '0'-bit directly adjoining the '1'-bit or '-1'-bit in the bit array selected, so as to obtain said at least one first sample value.

14. Arrangement as claimed in claim 8 or 9, characterized in that the sample-and-hold means (26,28) are adapted to sample the output signal of the variable equalizer means at a time instant which corresponds to a time instant which lies between the two time instants of occurrence of the two neighbouring '0'-bits directly adjoining the '1'-bit or '-1'-bit in the bit array selected, so as to obtain said at least one first sample value.

15. Arrangement as claimed in claim 10, 11 or 12, characterized in that the sample-and-hold means (26,28) are adapted to sample the output signal of the variable equalizer means at a time instant which corresponds to the time instant of occurrence of the '0'-bit directly adjoining the '1'-bit or '-1'-bit in the bit array selected, so as to obtain said at least one second sample value.

16. Arrangement as claimed in claim 11 or 12, characterized in that the sample-and-hold means (26,28) are adapted to sample the output signal of the variable equalizer means at a time instant which corresponds to a time instant which lies between the two time instants of occurrence of the two neighbouring '0'-bits directly adjoining the '1'-bit or '-1'-bit in the bit array selected, so as to obtain said at least one second sample value.

17. Arrangement as claimed in one of the claims 1 to 6, characterized in that the first digital signal is a two valued digital signal and that the bit array selector means are adapted to select bit arrays beginning with at least two '0'-bits and ending with at least one '1'-bit or bit arrays beginning with at least two '1'-bits and ending with at least one '0'-bit.(Fig. 22)

18. Arrangement as claimed in claim 17, characterized in that the bit array selector means (15i,15j) are adapted to select the following array of bits: (1,1,1,0) and (0,0,0,1), so as to generate the first selection signal in response to the selection of one of the said arrays.(Fig. 22)

19. Arrangement as claimed in claim 17, characterized in that the bit array selector means (19i,19j) are adapted to select the following arrays of bits: (1,0,0,0) and (0,1,1,1), so as to generate the second selection signal in response to the selection of one of those arrays. (Fig. 22)

20. Arrangement as claimed in claim 18, characterized in that the sample and hold means (26,28) are adapted to sample the output signal of the variable equalizer means at a first and a second time instant, so as to obtain a first and a second first sample value, the first time instant corresponding to the time instant of occurrence of the third bit from the right in the array of bits detected in the first digital signal, and the second time instant corresponding to the time instant of occurrence of the second bit from the right in the array of bits detected.

21. Arrangement as claimed in claim 18, characterized in that the sample and hold means (26,28) are adapted to sample the output signal of the variable equalizer means at a first and a second time instant, so as to obtain a first and a second first sample value, the first time instant corresponding to a time instant lying between the time instants of occurrence of the fourth and the third bit from the right in the array of bits selected in the first digital signal, and the second time instant corresponding to a time instant lying between the time instants of occurrence of the third and the second bit from the right in the array of bits selected.

22. Arrangement as claimed in claim 19, as far as dependent of claim 1, characterized in that the sample and hold means (26,28) are adapted to sample the output signal of the variable equalizer means at a first and a second time instant, so as to obtain a first and a second sample value, the first time instant corresponding to the time instant of occurrence of the second bit from the left in the array of bits selected in the first digital signal, and the second time instant corresponding to the time instant of occurrence of the third bit from the left in the array of bits selected.

23. Arrangement as claimed in claim 19, as far as dependent of claim 1, characterized in that the sample and hold means (26,28) are adapted to sample the output signal of the variable equalizer means at a first and a second time instant, so as to obtain a first and a second second sample value, the first time instant corresponding to a time instant lying between the time instants of occurrence of the second and the third bit from the left in the array of bits selected in the first digital signal, and the second time instant corresponding to a time instant lying between the time instants of occurrence of the third and the fourth bit from the left in the array of bits selected.

24. Arrangement as claimed in claim 20 and 22, or in claim 21 and 23, characterized in that the second control signal is proportional to the sum of the second first sample value and the first second sample value in the case of the following two subsequent bit arrays selected: (0,0,0,1) and (0,1,1,1), and that the second control signal is proportional to minus the sum of the second first sample value and the first second sample value in the case of the following two subsequent bit arrays selected: (1,1,1,0) and (1,0,0,0).

25. Arrangement as claimed in claim 20 and 22, or in claim 21 and 23, characterized in that the second control signal is proportional to the sum of the two first sample values and the two second sample values in the case of the following two subsequent bit arrays selected: (0,0,0,1) and (0,1,1,1), and that the second control signal is proportional to minus the sum of the two first sample values and the two second sample values in the case of the following two subsequent bit arrays selected: (1,1,1,0) and (1,0,0,0).

26. Arrangement as claimed in claim 20 and 22, or in claim 21 and 23, characterized in that the first control signal is proportional to the sum of the second first sample value and the second second sample value minus the sum of the first first sample value and the first second sample value, in the case of the following two subsequent bit arrays selected: (0,0,0,1) and (0,1,1,1), and that the first control signal is proportional to the sum of the first first sample value and the first second sample value minus the sum of the second first sample value and the second second sample value, in the case of the following two subsequent bit arrays selected: (1,1,1,0) and (1,0,0,0).

27. An arrangement for receiving a digital signal from a transmission medium, the arrangement comprising

- input means (3) for receiving a signal from the transmission medium,
- variable equalizer means (5), having an input coupled to an output of the input means, a control signal input for receiving a control signal and an output for supplying an equalized output signal,
- signal detector means (10a), having an input coupled to the output of the equalizer means and an output for supplying a first digital signal,
- equalizer control signal generator means (45), having an output for supplying an equalizer control signal, which output is coupled to the control signal input of the equalizer means,
- an output terminal (12) for supplying the digital signal,
- bit array selector means (14a), having an input coupled to the output of the signal detector means (10a) and having an output for supplying a selection signal upon detection of a specified array of bits included in the signal applied to its input, the bit array selector means (14a) being adapted to select bit arrays so as to select a signal portion in the response at the output of the variable equalizer means which corresponds to a signal portion which is suitable for deriving from it a first and a second control signal for the variable equalizer means,

- sample-and-hold means (26,28), having an input coupled to the output of the equalizer means, a control signal input (22,24) coupled to the output of the bit array selector means, and an output which is coupled to an input of the equalizer control signal generator means, the sample-and-hold means being adapted to sample and hold the signal applied to its input under the influence of the selection signal so as to obtain at least one first sample value and at least one second sample value, and to supply the first and second sample values to its output, the first and second sample values not coinciding with each other in time, the equalizer control signal generator means being adapted to generate the first and the second control signal upon receipt of the first and second sample values, the first control signal relating to a first arithmetical combination of the first and the second sample values, the second control signal relating to a second arithmetical combination of the first and the second sample values, the first and the second arithmetical combinations being different from each other, *one of the first and second arithmetical combinations comprising an addition of the first and second sample value, the other one of the first and second arithmetical combinations comprises the step of taking the difference between said first and second sample value.(Figs 5,14,24)*

28. Arrangement as claimed in claim 27, characterized in that the at least one first sample value is taken from a lead part of the said signal portion.

29. Arrangement as claimed in claim 27, characterized in that the at least one second sample value is taken from a lag part of the said signal portion.

30. Arrangement as claimed in claim 27, characterized in that, the first arithmetical combination is such that the first control signal is proportional to the sum of the at least one first and second sample values.

31. Arrangement as claimed in claim 27, characterized in that, the sample-and-hold means (26,28) are adapted to sample and hold the signal applied to its input under the influence of the selection signal so as to obtain one first sample value and one second sample value, and to supply the first and second sample values to its output.

32. Arrangement as claimed in claim 31, characterized in that the second arithmetical combination is such that the second control signal is proportional to the difference between the first and the second sample value.

33. Arrangement as claimed in one of the claims 27 to 32, characterized in that the first digital signal is a three valued digital signal and that the bit array selector means (14a) are adapted to select bit arrays beginning with at least one '0'-bit, followed by at least one '1'-bit or '-1'-bit and ending by at least one '0'-bit. (Fig. 5)

34. Arrangement as claimed in claim 33, characterized in that the bit array selector means (14a) are adapted to select the following arrays of bits: (0,0,1,0,0) and (0,0,-1,0,0), so as to generate the selection signal in response to the selection of one of said arrays.(Fig. 5)

35. Arrangement as claimed in claim 33, characterized in that the bit array selector means (14c) are adapted to select the following arrays of bits: (0,0,1,1,0,0) and (0,0,-1,-1,0,0), so as to generate the selection signal in response to the selection of one of said arrays.(Fig. 14)

36. Arrangement as claimed in claims 33, 34 or 35, characterized in that the sample-and-hold means (26,28) are adapted to sample the output signal of the variable equalizer means at a first and a second time instant, so as to obtain said at least one first and said at least one second sample value, the first and second time instants corresponding to the time instants at which the two '0'-bits occur that directly adjoin the '1'-bit(s) or the '-1'-bit(s) on both sides in the bit array selected.

37. Arrangement as claimed in claim 34 or 35, characterized in that the sample-and-hold means (26,28) are adapted to sample the output signal of the variable equalizer means at a first and a second time instant, so as to obtain said at least one first and said at least one second sample value, the first time instant corresponding to a time instant lying between the two time instants of occurrence of the two neighbouring '0'-bits directly adjoining the '1'-bit(s) or the '-1'-bit(s) at the left side in the bit array selected, and the second time instant corresponding to a time instant lying between the two time instants of occurrence of the two neighbouring '0'-bits directly adjoining the '1'-bit(s) or the '-1'-bit(s) in the bit array selected.

38. Arrangement as claimed in one of the claims 27 to 32, characterized in that the first digital signal is a two valued digital signal and that the bit array selector means (15k, 15l) are adapted to select bit arrays beginning with at least two '0'-bits and ending by at least two '1'-bits, or bit arrays beginning with at least two '1'-bits and ending with at least two '0'-bits. (Fig. 24)

39. Arrangement as claimed in claim 38, characterized in that the bit array selector means (15k, 15l) are adapted to select the following arrays of bits: (0,0,0,1,1,1) and (1,1,1,0,0,0), so as to generate the selection signal in response to the selection of one of said arrays.(Fig. 24)

40. Arrangement as claimed in claim 38 or 39, characterized in that the sample-and-hold means (26,28) are adapted to sample the output signal of the variable equalizer means at a first and a second time instant, the first and second time instants corresponding to the time instants of occurrence of the directly adjoining '0'-bit and '1'-bit in the bit array selected in the first digital signal, so as to obtain said at least one first sample value and said at least one second sample value.

41. Arrangement as claimed in claim 38 or 39, when dependent of claim 27, characterized in that the sample-and-hold means (26,28) are adapted to sample the output signal of the variable equalizer means at a first and a second time instant, the first time instant corresponding to a time instant lying between the two time instants of occurrence of the two neighbouring '0'-bits directly adjoining the '1'-bit in the bit array selected, so as to obtain said at least one first sample value, the second time instant corresponding to a time instant lying between the two time instants of occurrence of the two neighbouring '1'-bits directly adjoining '0'-bit in the bit array selected in the first digital signal, so as to obtain said at least one second sample value.

42. Arrangement as claimed in claim 40 or 41, characterized in that the second control signal is proportional to the sum of the first and second sample value.

43. Arrangement as claimed in claim 38 or 39, characterized in that the sample-and-hold means are adapted to sample the output signal of the variable equalizer means at a first and a second time instant, the first and second time instants corresponding to the time instants of occurrence of the two neighbouring '0'-bits that directly adjoin the '1'-bit in the bit array selected in the first digital signal, so as to obtain a first and a second first sample value, the sample-and-hold means being further adapted to sample the output signal of the variable equalizer means at a third and a fourth time instant, the third and fourth time instants corresponding to the time instants of occurrence of the two neighbouring '1'-bits that directly adjoin the '0'-bit in the bit array selected in the first digital signal, so as to obtain a first and a second second sample value.

44. Arrangement as claimed in claim 39, characterized in that the sample-and-hold means are adapted to sample the output signal of the variable equalizer means at a first and a second time instant, the first time instant corresponding to a time instant lying between the time instants of occurrence of the two neighbouring '0'-bits that directly adjoin the neighbouring '0' and '1'-bit in the bit array selected in the first digital signal, so as to obtain a first first sample value, the second time instant corresponding to a time instant lying between the time instants of occurrence of the two neighbouring '0'-bits that directly adjoin the '1'-bit in the bit array selected in the first digital signal, so as to obtain a second first sample value, the sample-and-hold means being further adapted to sample the output signal of the variable equalizer means at a third and a fourth time instant, the third time instant corresponding to a time instant lying between the time instants of occurrence of the two neighbouring '1'-bits that directly adjoin the '0'-bit in the bit array selected in the first digital signal, so as to obtain a first second sample value, the fourth time instant corresponding to a time instant lying between the time instants of occurrence of the two neighbouring '1'-bits that directly adjoin the neighbouring '0' and '1'-bit in the bit array selected in the first digital signal, so as to obtain a second second sample value.

45. Arrangement as claimed in claim 43 or 44, characterized in that the second control signal is proportional to the sum of the first and second first sample values and the first and second second sample values.

46. Arrangement as claimed in claim 43 or 44, characterized in that the first control signal is proportional to the sum of the second first sample value and the second second sample value minus the sum of the first first sample value and the first second sample value.

47. Arrangement as claimed in any one of the preceding claims, characterized in that, the variable equalizer means is adapted vary its magnitude response as a function of frequency in response to the first control signal and to vary its phase response as a function of frequency in response to the second control signal.

48. Arrangement as claimed in claim 47, when dependent of claim 5, 6, 31 or 32, characterized in that, the variable equalizer means is adapted to vary its magnitude response in a high frequency region of the operating frequency range in relation to the magnitude response in a low frequency region in said operating frequency range in response to the first control signal so as to bring the sum of the first and the second sample value to substantially zero, and is adapted to vary its phase response in the said high frequency region in relation to the phase response in said low frequency region in response to the second control signal, so as to bring the difference between the first and second sample value to substantially zero.

49. Arrangement as claimed in any one of the preceding claims, characterized in that the first and second control signal are applied to the control signal input of the variable equalizer means via integrating elements (I1,I2).

**Patentansprüche**

1. Anordnung zum Empfangen eines digitalen Signals von einem Übertragungsmedium, wobei die Anordnung folgendes umfaßt:

   - Eingangsmittel (3) zum Empfangen eines Signals vom Übertragungsmedium,
   - variable Entzerrungsmittel (5) mit einem Eingang, der mit einem Ausgang der Eingangsmittel verbunden ist, einem Steuersignaleingang zum Empfangen eines Steuersignals und einem Ausgang zum Liefern eines entzerrten Ausgangssignals,
   - Signaldetektormittel (10a) mit einem Eingang, der mit dem Ausgang der Entzerrungsmittel verbunden ist, und einem Ausgang zum Liefern eines ersten digitalen Signals,
   - Entzerrer-Steuersignal-Generatormittel (13.1) mit einem Ausgang zum Liefern eines Entzerrer-Steuersignals, wobei dieser Ausgang mit dem Steuersignaleingang der Entzerrungsmittel verbunden ist,
   - einen Ausgangsanschluß (12) zum Liefern des digitalen Signals,
   - Bitgruppierungs-Auswahlmittel (14, 16) mit einem Eingang, der mit dem Ausgang der Signaldetektormittel (10a) verbunden ist, und mit einem Ausgang zum Liefern eines ersten Auswahlsignals auf die Erkennung von mindestens einer spezifizierten Bitgruppierung hin, die in dem Signal enthalten ist, welches ihrem Eingang zugeführt wird, dadurch gekennzeichnet, daß die Auswahlmittel einen weiteren Ausgang besitzen, um auf die Erkennung von mindestens einer weiteren spezifizierten Bitgruppierung hin, die in dem Signal enthalten ist, welches ihrem Eingang zugeführt wird, ein zweites Auswahlsignal zu liefern, wobei die Bitgruppierungs-Auswahlmittel (14, 16) so ausgelegt sind, daß Bitgruppierungen gewählt werden, die Signalabschnitten in der Signalkurve am Ausgang des variablen Entzerrers entsprechen, um auf diese Weise Signalabschnitte zu wählen, die geeignet sind, um hiervon ein erstes und ein zweites Steuersignal für die variablen Entzerrungsmittel abzuleiten,

- Abtast-und-Halte-Mittel (26, 28) mit einem Eingang, der mit dem Ausgang der Entzerrungsmittel verbunden ist, einem Steuersignaleingang (22, 24), der mit dem Ausgang der Bitgruppierungs-Auswahlmittel verbunden ist, und einem Ausgang, der mit einem Eingang der Entzerrer-Steuersignal-Generatormittel (45') verbunden ist, wobei die Abtast-und-Halte-Mittel vorgesehen sind, um das ihrem Eingang unter dem Einfluß des ersten Auswahlsignals zugeführte Signal abzutasten und zu halten, um auf diese Weise zumindest einen ersten Abtastwert zu erhalten; um das ihrem Eingang unter dem Einfluß des zweiten Auswahlsignals zugeführte Signal abzutasten und zu halten, um auf diese Weise zumindest einen zweiten Abtastwert zu erhalten; und um den ersten und den zweiten Abtastwert an ihren Ausgang weiterzuleiten, wobei die Entzerrer-Steuersignal-Generatormittel vorgesehen sind, um das erste und das zweite Steuersignal auf den Empfang des ersten und des zweiten Abtastwertes hin zu erzeugen, wobei sich das erste Steuersignal auf eine erste arithmetische Kombination des ersten und des zweiten Abtastwertes bezieht und das zweite Steuersignal sich auf eine zweite arithmetische Kombination des ersten und des zweiten Abtastwertes bezieht, wobei die erste und die zweite Kombination sich voneinander unterscheiden, indem eine von der ersten und der zweiten arithmetischen Kombination eine Addition des ersten Abtastwertes und des zweiten Abtastwertes umfaßt und die andere von der ersten und der zweiten arithmetischen Kombination den Schritt der Differenzermittlung zwischen dem ersten und dem zweiten Abtastwert umfaßt. (Figur 11A, 17, 21, 22)

2. Anordnung nach Anspruch 1, <u>dadurch gekennzeichnet,</u> daß der mindestens eine erste Abtastwert von einem führenden Teil eines Signalabschnitts erfaßt wird.

3. Anordnung nach Anspruch 1, <u>dadurch gekennzeichnet,</u> daß der mindestens eine zweite Abtastwert von einem nachhängenden Teil eines Signalabschnitts erfaßt wird.

4. Anordnung nach Anspruch 1, <u>dadurch gekennzeichnet,</u> daß die erste arithmetische Kombination so beschaffen ist, daß das erste Steuersignal proportional zu der Summe des mindestens einen ersten Abtastwertes und des mindestens einen zweiten Abtastwertes ist.

5. Anordnung nach Anspruch 4, <u>dadurch gekennzeichnet,</u> daß die Abtast-und-Halte-Mittel (26, 28) vorgesehen sind, um das ihrem Eingang unter dem Einfluß des ersten Auswahlsignals zugeführte Signal abzutasten und zu halten, um auf diese Weise einen ersten Abtastwert zu erhalten; um das ihrem Eingang unter dem Einfluß des zweiten Auswahlsignals zugeführte Signal abzutasten und zu halten, um auf diese Weise einen zweiten Abtastwert zu erhalten; und um den ersten und den zweiten Abtastwert an ihren Ausgang weiterzuleiten.

6. Anordnung nach Anspruch 5, <u>dadurch gekennzeichnet,</u> daß die zweite arithmetische Kombination so beschaffen ist, daß das zweite Steuersignal proportional zu der Differenz zwischen dem ersten und dem zweiten Abtastwert ist.

7. Anordnung nach einem der vorhergehenden Ansprüche, <u>dadurch gekennzeichnet,</u> daß das erste digitale Signal ein Digitalsignal mit drei Werten ist, und daß die Bitgruppierungs-Auswahlmittel (14) vorgesehen sind, um Bitgruppierungen beginnend mit mindestens einem "0"-Bit und endend mit mindestens einem "1"-Bit oder "-1"-Bit auszuwählen (Figur 11A).

8. Anordnung nach Anspruch 7, <u>dadurch gekennzeichnet,</u> daß die Bitgruppierungs-Auswahlmittel (15a, 15b) vorgesehen sind, um die folgenden Bitgruppierungen auszuwählen: (0, 0, 1) und (0, 0, -1), um das erste Auswahlsignal in Reaktion auf die Auswahl von einer der genannten Gruppierungen zu erzeugen (Figur 11A).

9. Anordnung nach Anspruch 7, <u>dadurch gekennzeichnet,</u> daß die Bitgruppierungs-Auswahlmittel (15e, 15f) außerdem vorgesehen sind, um die folgenden Bitgruppierungen auszuwählen: (0, 0, 1, 1) und (0, 0, -1, -1), um das erste Auswahlsignal in Reaktion auf die Auswahl von einer der genannten Gruppierungen zu erzeugen (Figur 17).

10. Anordnung nach einem der Ansprüche 1 bis 6, <u>dadurch gekennzeichnet,</u> daß das erste digitale Signal ein Digitalsignal mit drei Werten ist, und daß die Bitgruppierungs-Auswahlmittel (16) vorgesehen sind, um Bitgruppierungen beginnend mit mindestens einem "1"-Bit oder "-1"-Bit und endend mit mindestens einem "0"-Bit auszuwählen (Figur 11A).

11. Anordnung nach Anspruch 10, dadurch gekennzeichnet, daß die Bitgruppierungs-Auswahlmittel (19a, 19b) vorgesehen sind, um die folgenden Bitgruppierungen auszuwählen: (1, 0, 0) und (-1, 0, 0), um das zweite Auswahlsignal in Reaktion auf die Auswahl von einer der genannten Gruppierungen zu erzeugen (Figur 11A).

12. Anordnung nach Anspruch 10, dadurch gekennzeichnet, daß die Bitgruppierungs-Auswahlmittel (19e, 19f) außerdem vorgesehen sind, um die folgenden Bitgruppierungen auszuwählen: (1, 1, 0, 0) und (-1, -1, 0, 0), um das zweite Auswahlsignal in Reaktion auf die Auswahl von einer der genannten Gruppierungen zu erzeugen (Figur 17).

13. Anordnung nach Anspruch 7, 8 oder 9, dadurch gekennzeichnet, daß die Abtast-und-Halte-Mittel (26, 28) vorgesehen sind, um das Ausgangssignal der variablen Entzerrungsmittel zu einem Zeitpunkt abzutasten, der dem Zeitpunkt des Auftretens des "0"-Bits direkt neben dem "1"-Bit oder dem "-1"-Bit in der gewählten Bitgruppierung entspricht, um den genannten mindestens einen ersten Abtastwert zu erhalten.

14. Anordnung nach Anspruch 8 oder 9, dadurch gekennzeichnet, daß die Abtast-und-Halte-Mittel (26, 28) vorgesehen sind, um das Ausgangssignal der variablen Entzerrungsmittel zu einem Zeitpunkt abzutasten, der einem Zeitpunkt entspricht, welcher zwischen den beiden Zeitpunkten des Auftretens der beiden benachbarten "0"-Bits direkt neben dem "1"-Bit oder dem "-1"-Bit in der gewählten Bitgruppierung liegt, um den genannten mindestens einen ersten Abtastwert zu erhalten.

15. Anordnung nach Anspruch 10, 11 oder 12, dadurch gekennzeichnet, daß die Abtast-und-Halte-Mittel (26, 28) vorgesehen sind, um das Ausgangssignal der variablen Entzerrungsmittel zu einem Zeitpunkt abzutasten, der dem Zeitpunkt des Auftretens des "0"-Bits direkt neben dem "1"-Bit oder dem "-1"-Bit in der gewählten Bitgruppierung entspricht, um den genannten mindestens einen zweiten Abtastwert zu erhalten.

16. Anordnung nach Anspruch 11 oder 12, dadurch gekennzeichnet, daß die Abtast-und-Halte-Mittel (26, 28) vorgesehen sind, um das Ausgangssignal der variablen Entzerrungsmittel zu einem Zeitpunkt abzutasten, der einem Zeitpunkt entspricht, welcher zwischen den beiden Zeitpunkten des Auftretens der beiden benachbarten "0"-Bits direkt neben dem "1"-Bit oder dem "-1"-Bit in der gewählten Bitgruppierung liegt, um den genannten mindestens einen zweiten Abtastwert zu erhalten.

17. Anordnung nach einem der Ansprüche 1 bis 6, dadurch gekennzeichnet, daß das erste digitale Signal ein Digitalsignal mit zwei Werten ist, und daß die Bitgruppierungs-Auswahlmittel vorgesehen sind, um Bitgruppierungen beginnend mit mindestens zwei "0"-Bits und endend mit mindestens einem "1"-Bit oder Bitgruppierungen beginnend mit mindestens zwei "1"-Bits und endend mit mindestens einem "0"-Bit auszuwählen (Figur 22).

18. Anordnung nach Anspruch 17, dadurch gekennzeichnet, daß die Bitgruppierungs-Auswahlmittel (15i, 15j) vorgesehen sind, um die folgenden Bitgruppierungen auszuwählen: (1, 1, 1, 0) und (0, 0, 0, 1), um das erste Auswahlsignal in Reaktion auf die Auswahl von einer der genannten Gruppierungen zu erzeugen (Figur 22).

19. Anordnung nach Anspruch 17, dadurch gekennzeichnet, daß die Bitgruppierungs-Auswahlmittel (19i, 19j) vorgesehen sind, um die folgenden Bitgruppierungen auszuwählen: (1, 0, 0, 0) und (0, 1, 1, 1), um das zweite Auswahlsignal in Reaktion auf die Auswahl von einer der genannten Gruppierungen zu erzeugen (Figur 22).

20. Anordnung nach Anspruch 18, dadurch gekennzeichnet, daß die Abtastund-Halte-Mittel (26, 28) vorgesehen sind, um das Ausgangssignal der variablen Entzerrungsmittel zu einem ersten und einem zweiten Zeitpunkt abzutasten, um einen ersten und einen zweiten ersten Abtastwert zu erhalten, wobei der erste Zeitpunkt dem Zeitpunkt des Auftretens des dritten Bits von rechts in der im ersten digitalen Signal erkannten Bitgruppierung entspricht und der zweite Zeitpunkt dem Zeitpunkt des Auftretens des zweiten Bits von rechts in der erkannten Bitgruppierung entspricht.

21. Anordnung nach Anspruch 18, dadurch gekennzeichnet, daß die Abtast-und-Halte-Mittel (26, 28) vorgesehen sind, um das Ausgangssignal der variablen Entzerrungsmittel zu einem ersten und einem zweiten Zeitpunkt abzutasten, um einen ersten und einen zweiten ersten Abtastwert zu erhalten, wobei der erste Zeitpunkt einem Zeitpunkt entspricht, welcher zwischen den Zeitpunkten des Auftretens des vierten und des dritten Bits von rechts in der im ersten digitalen Signal ausgewählten Bitgruppierung liegt, und wobei der zweite Zeitpunkt einem Zeitpunkt entspricht, welcher zwischen den Zeitpunkten des Auftretens des dritten und des zweiten Bits von rechts in der gewählten Bitgruppierung liegt.

22. Anordnung nach Anspruch 19, soweit abhängig von

Anspruch 1, <u>dadurch gekennzeichnet,</u> daß die Abtast-und-Halte-Mittel (26, 28) vorgesehen sind, um das Ausgangssignal der variablen Entzerrungsmittel zu einem ersten und einem zweiten Zeitpunkt abzutasten, um einen ersten und einen zweiten Abtastwert zu erhalten, wobei der erste Zeitpunkt dem Zeitpunkt des Auftretens des zweiten Bits von links in der im ersten digitalen Signal ausgewählten Bitgruppierung entspricht, und wobei der zweite Zeitpunkt dem Zeitpunkt des Auftretens des dritten Bits von links in der gewählten Bitgruppierung entspricht.

23. Anordnung nach Anspruch 19, soweit abhängig von Anspruch 1, <u>dadurch gekennzeichnet,</u> daß die Abtast-und-Halte-Mittel (26, 28) vorgesehen sind, um das Ausgangssignal der variablen Entzerrungsmittel zu einem ersten und einem zweiten Zeitpunkt abzutasten, um einen ersten und einen zweiten Abtastwert zu erhalten, wobei der erste Zeitpunkt einem Zeitpunkt entspricht, welcher zwischen den Zeitpunkten des Auftretens des zweiten und des dritten Bits von links in der im ersten digitalen Signal ausgewählten Bitgruppierung liegt, und wobei der zweite Zeitpunkt einem Zeitpunkt entspricht, welcher zwischen den Zeitpunkten des Auftretens des dritten und des vierten Bits von links in der gewählten Bitgruppierung liegt.

24. Anordnung nach den Ansprüchen 20 und 22 oder nach den Ansprüchen 21 und 23, <u>dadurch gekennzeichnet,</u> daß das zweite Steuersignal proportional zu der Summe des zweiten ersten Abtastwertes und des ersten zweiten Abtastwertes im Fall der Auswahl der folgenden beiden aufeinanderfolgenden Bitgruppierungen ist: (0, 0, 0, 1) und (0, 1, 1, 1), und daß das zweite Steuersignal proportional zu minus der Summe des zweiten ersten Abtastwertes und des ersten zweiten Abtastwertes im Fall der Auswahl der folgenden beiden aufeinanderfolgenden Bitgruppierungen ist: (1, 1, 1, 0) und (1, 0, 0, 0).

25. Anordnung nach den Ansprüchen 20 und 22 oder nach den Ansprüchen 21 und 23, <u>dadurch gekennzeichnet,</u> daß das zweite Steuersignal proportional zu der Summe der beiden ersten Abtastwerte und der beiden zweiten Abtastwerte im Fall der Auswahl der folgenden beiden aufeinanderfolgenden Bitgruppierungen ist: (0, 0, 0, 1) und (0, 1, 1, 1), und daß das zweite Steuersignal proportional zu minus der Summe der beiden ersten Abtastwerte und der beiden zweiten Abtastwerte im Fall der Auswahl der folgenden beiden aufeinanderfolgenden Bitgruppierungen ist: (1, 1, 1, 0) und (1, 0, 0, 0).

26. Anordnung nach den Ansprüchen 20 und 22 oder nach den Ansprüchen 21 und 23, <u>dadurch gekennzeichnet,</u> daß das erste Steuersignal proportional zu der Summe des zweiten ersten Abtastwertes und des zweiten zweiten Abtastwertes minus der Summe des ersten ersten Abtastwertes und des ersten zweiten Abtastwertes im Fall der Auswahl der folgenden beiden aufeinanderfolgenden Bitgruppierungen ist: (0, 0, 0, 1) und (0, 1, 1, 1), und daß das erste Steuersignal proportional zu der Summe des ersten ersten Abtastwertes und des ersten zweiten Abtastwertes minus der Summe des zweiten ersten Abtastwertes und des zweiten zweiten Abtastwertes im Fall der Auswahl der folgenden beiden aufeinanderfolgenden Bitgruppierungen ist: (1, 1, 1, 0) und (1, 0, 0, 0).

27. Anordnung zum Empfangen eines digitalen Signals von einem Übertragungsmedium, wobei die Anordnung folgendes umfaßt:

- Eingangsmittel (3) zum Empfangen eines Signals vom Übertragungsmedium,
- variable Entzerrungsmittel (5) mit einem Eingang, der mit einem Ausgang der Eingangsmittel verbunden ist, einem Steuersignaleingang zum Empfangen eines Steuersignals und einem Ausgang zum Liefern eines entzerrten Ausgangssignals,
- Signaldetektormittel (10a) mit einem Eingang, der mit dem Ausgang der Entzerrungsmittel verbunden ist, und einem Ausgang zum Liefern eines ersten digitalen Signals,
- Entzerrer-Steuersignal-Generatormittel (45) mit einem Ausgang zum Liefern eines Entzerrer-Steuersignals, wobei dieser Ausgang mit dem Steuersignaleingang der Entzerrungsmittel verbunden ist,
- einen Ausgangsanschluß (12) zum Liefern des digitalen Signals,
- Bitgruppierungs-Auswahlmittel (14a) mit einem Eingang, der mit dem Ausgang der Signaldetektormittel (10a) verbunden ist, und mit einem Ausgang zum Liefern eines ersten Auswahlsignals auf die Erkennung einer spezifizierten Bitgruppierung hin, die in dem Signal enthalten ist, welches ihrem Eingang zugeführt wird, wobei die Bitgruppierungs-Auswahlmittel (14a) vorgesehen sind, um Bitgruppierungen zu wählen, um auf diese Weise einen Signalabschnitt in Reaktion auf das Ausgangssignal der variablen Entzerrungsmittel zu wählen, welcher einem Signalabschnitt entspricht, der geeignet ist, um hiervon ein erstes und ein zweites Steuersignal für die variablen Entzerrungsmittel abzuleiten,
- Abtast-und-Halte-Mittel (26, 28) mit einem Eingang, der mit dem Ausgang der Entzerrungsmittel verbunden ist, einem Steuersignaleingang (22, 24), der mit dem Ausgang der Bitgruppierungs-Auswahlmittel verbunden ist, und einem Ausgang, der mit einem Eingang der Entzerrer-Steuersignal-Generatormittel verbunden ist, wobei die Abtastund-Halte-Mittel vorgesehen sind, um das ihrem Eingang unter dem Einfluß des Auswahlsignals zugeführte Signal abzutasten und zu halten, um auf diese Weise zumindest einen ersten Abtastwert und zumindest einen zweiten Abtastwert zu erhalten; und um den ersten und den zweiten Abtastwert an ihren Ausgang weiterzuleiten, wobei der erste und der zweite Abtastwert zeitlich nicht miteinander übereinstimmen, wobei die Entzerrer-Steuersignal-Generatormittel vorgesehen sind, um das erste und das zweite Steuersignal auf den Empfang des ersten und des zweiten Abtastwertes hin zu erzeugen, wobei sich das erste Steuersignal auf eine erste arithmetische Kombination des ersten und des zweiten Abtastwertes bezieht und das zweite Steuersignal sich auf eine zweite arithmetische Kombination des ersten und des zweiten Abtastwertes bezieht, wobei die erste und die zweite Kombination sich voneinander unterscheiden, indem eine von der ersten und der zweiten arithmetischen Kombination eine Addition des ersten Abtastwertes und des zweiten Abtastwertes umfaßt und die andere von der ersten und der zweiten arithmetischen Kombination den Schritt der Differenzermittlung zwischen dem ersten und dem zweiten Abtastwert umfaßt. (Figur 5, 14, 24)

28. Anordnung nach Anspruch 27, dadurch gekennzeichnet, daß der mindestens eine erste Abtastwert von einem führenden Teil eines Signalabschnitts erfaßt wird.

29. Anordnung nach Anspruch 27, dadurch gekennzeichnet, daß der mindestens eine zweite Abtastwert von einem nachhängenden Teil eines Signalabschnitts erfaßt wird.

30. Anordnung nach Anspruch 27, dadurch gekennzeichnet, daß die erste arithmetische Kombination so beschaffen ist, daß das erste Steuersignal proportional zu der Summe des mindestens einen ersten Abtastwertes und des mindestens einen zweiten Abtastwertes ist.

31. Anordnung nach Anspruch 27, dadurch gekennzeichnet, daß die Abtast-und-Halte-Mittel (26, 28) vorgesehen sind, um das ihrem Eingang unter dem Einfluß des Auswahlsignals zugeführte Signal abzutasten und zu halten, um auf diese Weise einen ersten Abtastwert und einen zweiten Abtastwert zu erhalten; und um den ersten und den zweiten Abtastwert an ihren Ausgang weiterzuleiten.

32. Anordnung nach Anspruch 31, dadurch gekennzeichnet, daß die zweite arithmetische Kombination so beschaffen ist, daß das zweite Steuersignal proportional zu der Differenz zwischen dem ersten und dem zweiten Abtastwert ist.

33. Anordnung nach einem der Ansprüche 27 bis 32, dadurch gekennzeichnet, daß das erste digitale Signal ein Digitalsignal mit drei Werten ist, und daß die Bitgruppierungs-Auswahlmittel (14a) vorgesehen sind, um Bitgruppierungen beginnend mit mindestens einem "0"-Bit, gefolgt von mindestens einem "1"-Bit oder "-1"-Bit und endend mit mindestens einem "0"-Bit auszuwählen (Figur 5).

34. Anordnung nach Anspruch 33, dadurch gekennzeichnet, daß die Bitgruppierungs-Auswahlmittel (14a) vorgesehen sind, um die folgenden Bitgruppierungen auszuwählen: (0, 0, 1, 0, 0) und (0, 0, -1, 0, 0), um das Auswahlsignal in Reaktion auf die Auswahl von einer der genannten Gruppierungen zu erzeugen (Figur 5).

35. Anordnung nach Anspruch 33, dadurch gekennzeichnet, daß die Bitgruppierungs-Auswahlmittel (14c) vorgesehen sind, um die folgenden Bitgruppierungen auszuwählen: (0, 0, 1, 1, 0, 0) und (0, 0, -1, -1, 0, 0), um das Auswahlsignal in Reaktion auf die Auswahl von einer der genannten Gruppierungen zu erzeugen (Figur 14).

36. Anordnung nach Anspruch 33, 34 oder 35, dadurch gekennzeichnet, daß die Abtast-und-Halte-Mittel (26, 28) vorgesehen sind, um das Ausgangssignal der variablen Entzerrungsmittel zu einem ersten und einem zweiten Zeitpunkt abzutasten, um den genannten mindestens einen ersten und den genannten mindestens einen zweiten Abtastwert zu erhalten, wobei der erste und der zweite Zeitpunkt den Zeitpunkten entsprechen, an denen die beiden "0"-Bits auftreten, die dem (den) "1"-Bit(s) oder dem (den) "-1"-Bit(s) an beiden Seiten in der gewählten Bitgruppierung direkt benachbart sind.

37. Anordnung nach Anspruch 34 oder 35, dadurch gekennzeichnet, daß die Abtast-und-Halte-Mittel (26, 28) vorgesehen sind, um das Ausgangssignal der variablen Entzerrungmittel zu einem ersten und einem zweiten Zeitpunkt abzutasten, um den genannten mindestens einen ersten und den genannten mindestens einen zweiten Abtastwert zu erhalten, wobei der erste Zeitpunkt einem Zeitpunkt entspricht, der zwischen den beiden Zeitpunkten des Auftretens der beiden benachbarten "0"-Bits direkt neben dem (den) "1"-Bit(s) oder dem (den) "-1"-Bit (s) auf der linken Seite in der gewählten Bitgruppierung liegt, und wobei der zweite Zeitpunkt einem Zeitpunkt entspricht, der zwischen den beiden Zeit-

25

punkten des Auftretens der beiden benachbarten "0"-Bits direkt neben dem (den) "1"-Bit(s) oder dem (den) "-1"-Bit(s) in der gewählten Gruppierung liegt.

38. Anordnung nach einem der Ansprüche 27 bis 32, dadurch gekennzeichnet, daß das erste digitale Signal ein Digitalsignal mit zwei Werten ist, und daß die Bitgruppierungs-Auswahlmittel (15k, 151) vorgesehen sind, um Bitgruppierungen beginnend mit mindestens zwei "0"-Bits und endend mit mindestens zwei "1"-Bits, oder Bitgruppierungen beginnend mit mindestens zwei "1"-Bits und endend mit mindestens zwei "0"-Bits auszuwählen (Figur 24).

39. Anordnung nach Anspruch 38, dadurch gekennzeichnet, daß die Bitgruppierungs-Auswahlmittel (15k, 151) vorgesehen sind, um die folgenden Bitgruppierungen auszuwählen: (0, 0, 0, 1, 1, 1) und (1, 1, 1, 0, 0, 0), um das Auswahlsignal in Reaktion auf die Auswahl von einer der genannten Gruppierungen zu erzeugen (Figur 24).

40. Anordnung nach Anspruch 38 oder 39, dadurch gekennzeichnet, daß die die Abtast-und-Halte-Mittel (26, 28) vorgesehen sind, um das Ausgangssignal der variablen Entzerrungsmittel zu einem ersten und einem zweiten Zeitpunkt abzutasten, wobei der erste und der zweite Zeitpunkt den Zeitpunkten des Auftretens des "0"-Bits und "1"-Bits direkt nebeneinander in der im ersten digitalen Signal gewählten Bitgruppierung entsprechen, um den genannten mindestens einen ersten Abtastwert und den genannten mindestens einen zweiten Abtastwert zu erhalten.

41. Anordnung nach Anspruch 38 oder 39, wenn abhängig von Anspruch 27, dadurch gekennzeichnet, daß die Abtast-und-Halte-Mittel (26, 28) vorgesehen sind, um das Ausgangssignal der variablen Entzerrungsmittel zu einem ersten und einem zweiten Zeitpunkt abzutasten, wobei der erste Zeitpunkt einem Zeitpunkt entspricht, der zwischen den beiden Zeitpunkten des Auftretens der beiden benachbarten "0"-Bits direkt neben dem "1"-Bit in der gewählten Bitgruppierung liegt, um den genannten mindestens einen ersten Abtastwert zu erhalten, und wobei der zweite Abtastzeitpunkt einem Zeitpunkt entspricht, der zwischen den beiden Zeitpunkten des Auftretens der beiden benachbarten "1"-Bits direkt neben dem "0"-Bit in der im ersten digitalen Signal gewählten Bitgruppierung liegt, um den genannten mindestens einen zweiten Abtastwert zu erhalten.

42. Anordnung nach Anspruch 40 oder 41, dadurch gekennzeichnet, daß das zweite Steuersignal proportional zu der Summe des ersten und des zweiten Abtastwertes ist.

43. Anordnung nach Anspruch 38 oder 39, dadurch gekennzeichnet, daß die Abtast-und-Halte-Mittel vorgesehen sind, um das Ausgangssignal der variablen Entzerrungsmittel zu einem ersten und einem zweiten Zeitpunkt abzutasten, wobei der erste und der zweite Zeitpunkt den Zeitpunkten des Auftretens der beiden benachbarten "0"-Bits direkt neben dem "1"-Bit in der im ersten digitalen Signal gewählten Bitgruppierung entsprechen, um einen ersten und einen zweiten ersten Abtastwert zu erhalten; wobei die Abtast-und-Halte-Mittel weiterhin vorgesehen sind, um das Ausgangssignal der variablen Entzerrungsmittel zu einem dritten und einem vierten Zeitpunkt abzutasten, wobei der dritte und der vierte Zeitpunkt den Zeitpunkten des Auftretens der beiden benachbarten "1"-Bits direkt neben dem "0"-Bit in der im ersten digitalen Signal gewählten Bitgruppierung entsprechen, um einen ersten und einen zweiten zweiten Abtastwert zu erhalten.

44. Anordnung nach Anspruch 39, dadurch gekennzeichnet, daß die Abtast-und-Halte-Mittel vorgesehen sind, um das Ausgangssignal der variablen Entzerrungsmittel zu einem ersten und einem zweiten Zeitpunkt abzutasten, wobei der erste Zeitpunkt einem Zeitpunkt entspricht, der zwischen den Zeitpunkten des Auftretens der beiden benachbarten "0"-Bits direkt neben den benachbarten "0"- und "1"-Bits in der im ersten digitalen Signal gewählten Bitgruppierung liegt, um einen ersten ersten Abtastwert zu erhalten, und wobei der zweite Zeitpunkt einem Zeitpunkt entspricht, der zwischen den Zeitpunkten des Auftretens der beiden benachbarten "0"-Bits direkt neben dem "1"-Bit in der im ersten digitalen Signal gewählten Bitgruppierung liegt, um einen zweiten ersten Abtastwert zu erhalten; wobei die Abtast-und-Halte-Mittel weiterhin vorgesehen sind, um das Ausgangssignal der variablen Entzerrungsmittel zu einem dritten und einem vierten Zeitpunkt abzutasten, wobei der dritte Zeitpunkt einem Zeitpunkt entspricht, der zwischen den Zeitpunkten des Auftretens der beiden benachbarten "1"-Bits direkt neben dem "0"-Bit in der im ersten digitalen Signal gewählten Bitgruppierung liegt, um einen ersten zweiten Abtastwert zu erhalten, und wobei der vierte Zeitpunkt einem Zeitpunkt entspricht, der zwischen den Zeitpunkten des Auftretens der beiden benachbarten "1"-Bits direkt neben den benachbarten "0"- und "1"-Bits in der im ersten digitalen Signal gewählten Bitgruppierung liegt, um einen zweiten zweiten Abtastwert zu erhalten.

45. Anordnung nach Anspruch 43 oder 44, dadurch gekennzeichnet, daß das zweite Steuersignal proportional zu der Summe des ersten und des zweiten ersten Abtastwertes und des ersten und des zweiten zweiten Abtastwertes ist.

**46.** Anordnung nach Anspruch 43 oder 44, <u>dadurch ge-kennzeichnet,</u> daß das erste Steuersignal proportional zu der Summe des zweiten ersten Abtastwertes und des zweiten zweiten Abtastwertes minus der Summe des ersten ersten Abtastwertes und des ersten zweiten Abtastwertes ist.

**47.** Anordnung nach einem der vorhergehenden Ansprüche, <u>dadurch gekennzeichnet,</u> daß die variablen Entzerrungsmittel vorgesehen sind, um den Größenverlauf als eine Funktion der Frequenz in Reaktion auf das erste Steuersignal zu variieren, und um den Phasenverlauf als eine Funktion der Frequenz in Reaktion auf das zweite Steuersignal zu variieren.

**48.** Anordnung nach Anspruch 47, wenn abhängig von Anspruch 5, 6, 31 oder 32, <u>dadurch gekennzeich-net,</u> daß die variablen Entzerrungsmittel vorgesehen sind, um den Größenverlauf in einer Region hoher Frequenzen des Betriebsfrequenzbereiches im Vergleich zu dem Größenverlauf in einer Region niedriger Frequenzen in dem genannten Betriebsfrequenzbereich in Reaktion auf das erste Steuersignal so zu variieren, daß die Summe des ersten und des zweiten Abtastwertes im wesentlichen gleich Null wird; und daß sie vorgesehen sind, um den Phasenverlauf in der genannten Region hoher Frequenzen im Vergleich zu dem Phasenverlauf in der genannten Region niedriger Frequenzen in Reaktion auf das zweite Steuersignal so zu variieren, daß die Differenz zwischen dem ersten und dem zweiten Abtastwert im wesentlichen gleich Null wird.

**49.** Anordnung nach einem der vorhergehenden Ansprüche, <u>dadurch gekennzeichnet,</u> daß das erste und das zweite Steuersignal dem Steuersignaleingang der variablen Entzerrungsmittel über integrierende Elemente (I1, I2) zugeführt werden.

**Revendications**

**1.** Dispositif destiné à recevoir un signal numérique provenant d'un support de transmission, le dispositif comprenant :

- un moyen d'entrée (3) pour recevoir un signal provenant du support de transmission;
- un moyen égaliseur variable (5) ayant une entrée couplée à une sortie du moyen d'entrée, une entrée de signal de commande pour recevoir un signal de commande et une sortie pour fournir un signal de sortie égalisé;
- des moyens de détection de signal (10a) ayant une entrée couplée à la sortie du moyen égaliseur et une sortie pour fournir un premier signal numérique;
- des moyens de génération de signaux de commande d'égaliseur (13.1) ayant une sortie pour fournir un signal de commande d'égaliseur, laquelle sortie est couplée à l'entrée de signal de commande du moyen égaliseur;
- une borne de sortie (12) pour fournir le signal numérique, et
- des moyens de sélection de configuration binaire (14, 16) ayant une entrée couplée à la sortie des moyens de détection de signal (10a) et ayant une sortie pour fournir un premier signal de sélection lors de la détection d'au moins une configuration binaire spécifiée comprise dans le signal appliqué à leur entrée,

caractérisé en ce que les moyens de sélection ont en outre une sortie pour fournir un deuxième signal de sélection lors de la détection d'au moins une autre configuration binaire spécifiée comprise dans le signal appliqué à leur entrée, les moyens de sélection de configuration binaire (14, 16) étant à même de sélectionner les configurations binaires correspondant à des parties de signal dans la réponse à la sortie de l'égaliseur variable de manière à sélectionner des parties de signal à partir desquelles on peut dériver un premier et un deuxième signaux de commande pour le moyen égaliseur variable;

- des moyens échantillonneurs-bloqueurs (26, 28) ayant une entrée couplée à la sortie du moyen égaliseur, une entrée de signal de commande (22, 24) couplée à la sortie des moyens de sélection de configuration binaire et une sortie couplée à une entrée des moyens de génération de signaux de commande égaliseurs (45'), les moyens échantillonneurs-bloqueurs étant à même d'échantillonner et bloquer le signal appliqué à leur entrée sous l'action du premier signal de sélection afin d'obtenir au moins une première valeur échantillon, d'échantillonner et de bloquer le signal appliqué à leur entrée sous l'action du deuxième signal de sélection afin d'obtenir au moins une deuxième valeur échantillon et de fournir les première et deuxième valeurs échantillons à leur sortie, les moyens de génération de signaux de commande d'égaliseur étant à même de générer les premier et deuxième signaux de commande à la réception des première et deuxième valeurs échantillons, le premier signal de commande correspondant à une première combinaison arithmétique des première et deuxième valeurs échantillons, le deuxième signal de commande correspondant à une deuxième combinaison arithmétique des première et deuxième valeurs échantillons, les première et deuxième combinaisons arithmétiques étant différentes l'une de l'autre, une des première et deuxième combinaisons arithmétiques comprenant une addition de la première valeur échantillon et de la deuxième valeur échantillon, l'autre combinaison arithmétique comprenant l'étape faisant la différence entre lesdites première et deuxième valeurs échantillons. (Fig. 11A, 17, 21, 22)

2. Dispositif suivant la revendication 1, caractérisé en ce que la au moins une première valeur échantillon est prise dans la partie avant d'une partie de signal.

3. Dispositif suivant la revendication 1, caractérisé en ce que la au moins une deuxième valeur échantillon est prise dans la partie arrière d'une partie de signal.

4. Dispositif suivant la revendication 1, caractérisé en ce que la première combinaison arithmétique est telle que le premier signal de commande est proportionnel à la somme des au moins une première et deuxième valeurs échantillons.

5. Dispositif suivant la revendication 4, caractérisé en ce que les moyens échantillonneurs-bloqueurs (26, 28) sont à même d'échantillonner et de bloquer le signal appliqué à leur entrée sous l'action du premier signal de sélection de manière à obtenir une première valeur échantillon, d'échantillonner et de bloquer le signal appliqué à leur entrée sous l'action du deuxième signal de sélection de manière à obtenir une deuxième valeur échantillon et de fournir les première et deuxième valeurs échantillons à leur sortie.

6. Dispositif suivant la revendication 5, caractérisé en ce que la deuxième combinaison arithmétique est telle que le deuxième signal de commande est proportionnel à la différence entre les première et deuxième valeurs échantillons.

7. Dispositif suivant l'une des revendications précédentes, caractérisé en ce que le premier signal numérique est un signal numérique à trois valeurs et en ce que les moyens de sélection de configuration binaire (14) sont à même de sélectionner les configurations binaires commençant par au moins un bit '0' et se terminant par au moins un bit '1' ou '-1'. (Fig. 11A).

8. Dispositif suivant la revendication 7, caractérisé en ce que les moyens de sélection de configuration binaire (15a, 15b) sont à même de sélectionner les configurations binaires suivantes : (0,0,1) et (0,0,-1), de manière à générer le premier signal de sélection en réaction à la sélection de l'une desdites configurations. (Fig. 11A).

9. Dispositif suivant la revendication 7, caractérisé en ce que les moyens de sélection de configuration binaire (15e, 15f) sont en outre à même de sélectionner les configurations binaires suivantes (0,0,1,1) et (0,0,-1,-1), de manière à générer le premier signal de sélection en réaction à la sélection de l'une desdites configurations. (Fig. 17).

10. Dispositif suivant l'une quelconque des revendications 1 à 6, caractérisé en ce que le premier signal numérique est un signal numérique à trois valeurs et en ce que les moyens de sélection de configuration binaire (16) sont à même de sélectionner les configurations binaires commençant par au moins un bit '1' ou '-1' et terminant par au moins un bit '0' . (Fig. 11A).

11. Dispositif suivant la revendication 10, caractérisé en ce que les moyens de sélection de configuration binaire (19a, 19b) sont à même de sélectionner les configurations binaires suivantes (1,0,0) et (-1,0,0), de manière à générer le deuxième signal de sélection en réaction à la sélection de l'une desdites configurations. (Fig. 11A).

12. Dispositif suivant la revendication 10 caractérisé en ce que les moyens de sélection de configuration binaire (19e, 19f) sont en outre à même de sélectionner les configurations binaires suivantes : (1,1,0,0) et (-1,-1,0,0), de manière à générer le deuxième signal de sélection en réaction à la sélection de l'une desdites configurations. (Fig. 17).

13. Dispositif suivant la revendication 7, 8 ou 9, caractérisé en ce que les moyens échantillonneurs-bloqueurs (26, 28) sont à même d'échantillonner le signal de sortie du moyen égaliseur variable à un instant qui correspond à l'instant d'occurrence du bit '0' voisin, directement proche du bit '1' ou '-1' dans la configuration binaire sélectionnée, de manière à obtenir ladite au moins une première valeur échantillon.

14. Dispositif suivant la revendication 8 ou 9, caractérisé en ce que les moyens échantillonneurs-bloqueurs (26, 28) sont à même d'échantillonner le signal de sortie du moyen égaliseur variable à un instant qui correspond à un instant situé entre les deux instants d'occurrence des deux bits '0' voisins, directement proches du bit '1' ou '-1' dans la configuration binaire sélectionnée, de manière à obtenir ladite au moins une première valeur échantillon.

15. Dispositif suivant la revendication 10, 11 ou 12, caractérisé en ce que les moyens échantillonneurs-bloqueurs (26, 28) sont à même d'échantillonner le signal de sortie du moyen égaliseur variable à un instant qui correspond à l'instant d'occurrence du bit '0' directement proche du bit '1' ou '-1' dans la configuration binaire sélectionnée, de manière à obtenir ladite au moins une deuxième valeur échantillon.

16. Dispositif suivant la revendication 11 ou 12, caractérisé en ce que les moyens échantillonneurs-bloqueurs (26, 28) sont à même d'échantillonner le signal de sortie du moyen égaliseur variable à un instant qui correspond à un instant situé entre les deux instants d'occurrence des deux bits '0' voisins, directement proches du bit '1' ou '-1' dans la configuration binaire sélectionnée, de manière à obtenir ladite au moins une deuxième valeur échantillon.

17. Dispositif suivant l'une quelconque des revendications 1 à 6, caractérisé en ce que le premier signal numérique est un signal numérique à deux valeurs et en ce que les moyens de sélection de configuration binaire sont à même de sélectionner les configurations binaires commençant par au moins deux bits '0' et terminant par au moins un bit '1' ou des configurations binaires commençant par au moins deux bits '1' et terminant par au moins un bit '0'. (Fig. 22).

18. Dispositif suivant la revendication 17, caractérisé en ce que les moyens de sélection de configuration binaire (15i, 15j) sont à même de sélectionner les configurations binaires suivantes : (1,1,1,0) et (0,0,0,1), de manière à générer le premier signal de sélection en réaction à la sélection de l'une desdites configurations. (Fig. 22).

19. Dispositif suivant la revendication 17, caractérisé en ce que les moyens de sélection de configuration binaire (19i, 19j) sont à même de sélectionner les configurations binaires suivantes : (1,0,0,0) et (0,1,1,1), de manière à générer le deuxième signal de sélection en réaction à la sélection de l'une de ces configurations. (Fig. 22).

20. Dispositif suivant la revendication 18, caractérisé en ce que les moyens échantillonneurs-bloqueurs (26, 28) sont à même d'échantillonner le signal de sortie du moyen égaliseur variable à des premier et deuxième instants, de manière à obtenir des première et deuxième valeurs échantillons, le premier instant correspondant à l'instant d'occurrence du troisième bit à partir de la droite dans la configuration binaire détectée dans le premier signal numérique et le deuxième instant correspondant à l'instant d'occurrence du deuxième bit à partir de la droite dans la configuration binaire détectée.

21. Dispositif suivant la revendication 18, caractérisé en ce que les moyens échantillonneurs-bloqueurs (26, 28) sont à même d'échantillonner le signal de sortie du moyen égaliseur variable à des premier et deuxième instants, de manière à obtenir des première et deuxième valeurs échantillons, le premier instant correspondant à un instant situé entre les instants d'occurrence des quatrième et troisième bits à partir de la droite dans la configuration binaire sélectionnée dans le premier signal numérique et le deuxième instant correspondant à un instant situé entre les instants d'occurrence des troisième et deuxième bits à partir de la droite dans la configuration binaire sélectionnée.

22. Dispositif suivant la revendication 19, dans la mesure de sa dépendance de la revendication 1, caractérisé en ce que les moyens échantillonneurs-bloqueurs (26, 28) sont à même d'échantillonner le signal de sortie du moyen égaliseur variable à des premier et deuxième instants de manière à obtenir des première et deuxième valeurs échantillons, le premier instant correspondant à l'instant d'occurrence du deuxième bit à partir de la gauche dans la configuration binaire sélectionnée dans le premier signal numérique et le deuxième instant correspondant à l'instant d'occurrence du troisième bit à partir de la gauche dans la configuration binaire sélectionnée.

23. Dispositif suivant la revendication 19, dans la mesure de sa dépendance de la revendication 1, caractérisé en ce que les moyens échantillonneurs-bloqueurs (26, 28) sont à même d'échantillonner le signal de sortie du moyen égaliseur variable à des premier et deuxième instants, de manière à obtenir des première et deuxième valeurs échantillons, le premier instant correspondant à un instant situé entre les instants d'occurrence des deuxième et troisième bits à partir de la gauche dans la configuration binaire sélectionnée dans le premier signal numérique et le deuxième instant correspondant à un instant situé entre les instants d'occurrence des troisième et quatrième bits à partir de la gauche dans la configuration binaire sélectionnée.

24. Dispositif suivant les revendications 20 et 22, ou suivant les revendications 21 et 23, caractérisé en ce que le deuxième signal de commande est proportionnel à la somme de la deuxième première valeur échantillon et de la première deuxième valeur échantillon dans le cas des deux configurations binaires consécutives sélectionnées suivantes : (0,0,0,1) et (0,1,1,1) et en ce que le deuxième signal de commande est proportionnel à moins la somme de la deuxième première valeur échantillon et de la première deuxième valeur échantillon dans le cas des deux configurations binaires consécutives sélectionnées suivantes : (1,1,1,0) et (1,0,0,0).

25. Dispositif suivant les revendications 20 et 22, ou suivant les revendications 21 et 23, caractérisé en ce que le deuxième signal de commande est proportionnel à la somme des deux premières valeurs échantillons et des deux deuxièmes valeurs échantillons, dans le cas des deux configurations binaires consécutives sélectionnées suivantes : (0,0,0,1) et (0,1,1,1), et en ce que le deuxième signal de commande est proportionnel à moins la somme des deux premières valeurs échantillons et des deux deuxièmes valeurs échantillons, dans le cas des deux configurations binaires consécutives sélectionnées suivantes : (1,1,1,0) et (1,0,0,0).

26. Dispositif suivant les revendications 20 et 22, ou suivant les revendications 21 et 23, caractérisé en ce que le premier signal de commande est proportionnel à la somme de la deuxième première valeur échantillon et de la deuxième deuxième valeur échantillon moins la somme de la première première valeur échantillon et de la première deuxième valeur échantillon, dans le cas des deux configurations binaires consécutives sélectionnées suivantes : (0,0,0,1) et (0,1,1,1), et en ce que le premier signal de commande est proportionnel à la somme de la première première valeur échantillon et de la première deuxième valeur échantillon moins la somme de la deuxième première valeur échantillon et de la deuxième deuxième valeur échantillon, dans le cas des deux configurations binaires consécutives sélectionnées suivantes : (1,1,1,0) et (1,0,0,0).

27. Dispositif destiné à recevoir un signal numérique provenant d'un support de transmission, le dispositif comprenant :

- un moyen d'entrée (3) pour recevoir un signal provenant du support de transmission;
- un moyen égaliseur variable (5) ayant une entrée couplée à une sortie du moyen d'entrée, une entrée de signal de commande pour recevoir un signal de commande et une sortie pour fournir un signal de sortie égalisé;
- des moyens de détection de signal (10a) ayant une entrée couplée à la sortie du moyen égaliseur et une sortie pour fournir un premier signal numérique;
- des moyens de génération de signaux de commande d'égaliseur (45) ayant une sortie pour fournir un signal de commande d'égaliseur, laquelle sortie est couplée à l'entrée de signal de commande du moyen égaliseur;
- une borne de sortie (12) pour fournir le signal numérique;
- des moyens de sélection de configuration binaire (14a) ayant une entrée couplée à la sortie des moyens de détection de signal (10a) et ayant une sortie pour fournir un signal de sélection lors de la détection d'une configuration binaire spécifiée comprise dans le signal appliqué à leur entrée, les moyens de sélection de configuration binaire (14a) étant à même de sélectionner des configurations binaires de manière à sélectionner une partie de signal dans la réponse à la sortie du moyen égaliseur variable qui correspond à une partie de signal à partir de laquelle on peut dériver des premier et deuxième signaux de commande pour le moyen égaliseur variable, et

- des moyens échantillonneurs-bloqueurs (26,28) ayant une entrée couplée à la sortie du moyen égaliseur, une entrée de signal de commande (22,24) couplée à la sortie des moyens de sélection de configuration binaire et une sortie couplée à une entrée des moyens de génération de signaux de commande d'égaliseur, les moyens échantillonneurs-bloqueurs étant à même d'échantillonner et de bloquer le signal appliqué à leur entrée sous l'action du signal de sélection, de manière à obtenir au moins une première valeur échantillon et au moins une deuxième valeur échantillon, et pour fournir les première et deuxième valeurs échantillons à leur sortie, les première et deuxième valeurs échantillons ne coïncidant pas l'une avec l'autre dans le temps, les moyens de génération de signaux de commande d'égaliseur étant à même de générer les premier et deuxième signaux de commande lors de la réception des première et deuxième valeurs échantillons, le premier signal de commande correspondant à une première combinaison arithmétique des première et deuxième valeurs échantillons, le deuxième signal de commande correspondant à une deuxième combinaison arithmétique des première et deuxième valeurs échantillons, les première et deuxième combinaisons arithmétiques étant différentes l'une de l'autre, une des première et deuxième combinaisons arithmétiques comprenant une addition des première et deuxième valeurs échantillons, l'autre combinaison arithmétique comprenant l'étape faisant la différence entre lesdites première et deuxième valeurs échantillons. (Fig. 5, 14, 24)

28. Dispositif suivant la revendication 27, caractérisé en ce que la au moins une première valeur échantillon est prise dans la partie avant de ladite partie de signal.

29. Dispositif suivant la revendication 27, caractérisé en ce que la au moins une deuxième valeur échantillon est prise dans la partie arrière de ladite partie de signal.

30. Dispositif suivant la revendication 27, caractérisé en ce que la première combinaison arithmétique est telle que le premier signal de commande est proportionnel à la somme des au moins une première et deuxième valeurs échantillons.

**31.** Dispositif suivant la revendication 27, caractérisé en ce que les moyens échantillonneurs-bloqueurs (26, 28) sont à même d'échantillonner et de bloquer le signal appliqué à leur entrée sous l'action du signal de sélection, de manière à obtenir une première valeur échantillon et une deuxième valeur échantillon, et de fournir les première et deuxième valeurs échantillons à leur sortie.

**32.** Dispositif suivant la revendication 31, caractérisé en ce que la deuxième combinaison arithmétique est telle que le deuxième signal de commande est proportionnel à la différence entre les première et deuxième valeurs échantillons.

**33.** Dispositif suivant l'une quelconque des revendications 27 à 32, caractérisé en ce que le premier signal numérique est un signal numérique à trois valeurs et en ce que les moyens de sélection de configuration binaire (14a) sont à même de sélectionner les configurations binaires commençant par au moins un bit '0', suivi par au moins un bit '1' ou '-1' et se terminant par au moins un bit '0'. (Fig. 5).

**34.** Dispositif suivant la revendication 33, caractérisé en ce que les moyens de sélection de configuration binaire (14a) sont à même de sélectionner les configurations binaires suivantes : (0,0,1,0,0) et (0,0,-1,0,0), de manière à générer le signal de sélection en réaction à la sélection de l'une desdites configurations. (Fig. 5).

**35.** Dispositif suivant la revendication 33, caractérisé en ce que les moyens de sélection de configuration binaire (14c) sont à même de sélectionner les configurations binaires suivantes (0,0,1,1,0,0) et (0,0,-1,-1,0,0), de manière à générer le signal de sélection en réaction à la sélection de l'une desdites configurations. (Fig. 14).

**36.** Dispositif suivant la revendication 33, 34 ou 35, caractérisé en ce que les moyens échantillonneurs-bloqueurs (26, 28) sont à même d'échantillonner le signal de sortie du moyen égaliseur variable à des premier et deuxième instants, de manière à obtenir lesdites au moins une première et deuxième valeurs échantillons, les premier et deuxième instants correspondant aux instants auxquels les deux bits '0' qui sont directement proches du bit '1' ou '-1' apparaissent des deux côtés dans la configuration binaire sélectionnée.

**37.** Dispositif suivant la revendication 34 ou 35, caractérisé en ce que les moyens échantillonneurs-bloqueurs (26, 28) sont à même d'échantillonner le signal de sortie du moyen égaliseur variable à des premier et deuxième instants, de manière à obtenir lesdites au moins une première et deuxième valeurs échantillons, le premier instant correspondant à l'instant situé entre les deux instants d'occurrence des deux bits '0' voisins, directement proches du ou des bits '1' ou '-1' à gauche dans la configuration binaire sélectionnée et le deuxième instant correspondant à un instant situé entre les deux instants d'occurrence des deux bits '0' voisins, directement proches du ou des bits '1' ou '-1' à gauche dans la configuration binaire sélectionnée.

**38.** Dispositif suivant l'une des revendications 27 à 32, caractérisé en ce que le premier signal numérique est un signal numérique à deux valeurs et en ce que les moyens de sélection de configuration binaire (15k, 15l) sont à même de sélectionner les configurations binaires commençant par au moins deux bits '0' et se terminant par au moins deux bits '1' ou les configurations binaires commençant par au moins deux bits '1' et se terminant par au moins deux bits '0'. (Fig. 24).

**39.** Dispositif suivant la revendication 38, caractérisé en ce que les moyens de sélection de configuration binaire (15k, 15l) sont à même de sélectionner les configurations binaires suivantes : (0,0,0,1,1,1) et (1,1,1,0,0,0,), de manière à générer le signal de sélection en réaction à la sélection de l'une desdites configurations. (Fig. 24).

**40.** Dispositif suivant la revendication 38 ou 39, caractérisé en ce que les moyens échantillonneurs-bloqueurs (26, 28) sont à même d'échantillonner le signal de sortie du moyen égaliseur variable à des premier et deuxième instants, les premier et deuxième instants correspondant aux instants d'occurrence des bits '0' et '1' directement proches dans la configuration binaire sélectionnée afin d'obtenir lesdites au moins une première valeur échantillon et au moins une deuxième valeur échantillon.

**41.** Dispositif suivant la revendication 38 ou 39, dépendant de la revendication 27, caractérisé en ce que les moyens échantillonneurs-bloqueurs (26, 28) sont à même d'échantillonner le signal de sortie du moyen égaliseur variable à des premier et deuxième instants, le premier instant correspondant à l'instant situé entre les deux instants d'occurrence des deux bits '0' voisins, directement proches du bit '1' dans la configuration binaire sélectionnée, de manière à obtenir ladite au moins une première valeur échantillon, le deuxième instant correspondant à l'instant situé entre les deux instants d'occurrence des deux bits '1' voisins, directement proches du bit '0' dans la configuration binaire sélectionnée dans le signal numérique, de manière à obtenir ladite au moins une deuxième valeur échantillon

**42.** Dispositif suivant la revendication 40 ou 41, caractérisé en ce que le deuxième signal de commande est proportionnel à la somme des première et deuxième valeurs échantillons.

**43.** Dispositif suivant la revendication 38 ou 39, caractérisé en ce que les moyens échantillonneurs-bloqueurs sont à même d'échantillonner le signal de sortie du moyen égaliseur variable à des premier et deuxième instants, les premier et deuxième instants correspondant aux instants d'occurrence des deux bits '0' voisins, directement proches du bit '1' dans la configuration binaire sélectionnée dans le premier signal numérique, de manière à obtenir des première et deuxième valeurs échantillons, les moyens échantillonneurs-bloqueurs étant en outre à même d'échantillonner le signal de sortie du moyen égaliseur variable à des troisième et quatrième instants, les troisième et quatrième instants correspondant aux instants d'occurrence des deux bits '1' voisins, directement proches du bit '0' dans la configuration binaire sélectionnée dans le premier signal numérique, de manière à obtenir des première et deuxième valeurs échantillons.

**44.** Dispositif suivant la revendication 39, caractérisé en ce que les moyens échantillonneurs-bloqueurs sont à même d'échantillonner le signal de sortie du moyen égaliseur variable à des premier et deuxième instants, le premier instant correspondant à un instant situé entre les instants d'occurrence des deux bits '0' voisins, directement proches des bits '0' et '1' dans la configuration binaire sélectionnée dans le premier signal numérique, de manière à obtenir une première première valeur échantillon, le deuxième instant correspondant à un instant situé entre les instants d'occurrence des deux bits '0' voisins, directement proches du bit '1' dans la configuration binaire sélectionnée dans le premier signal numérique, de manière à obtenir une deuxième première valeur échantillon, les moyens échantillonneurs-bloqueurs étant en outre à même d'échantillonner le signal de sortie du moyen égaliseur variable à des troisième et quatrième instants, le troisième instant correspondant à un instant situé entre les instants d'occurrence des deux bits '1' voisins, directement proches du bit '0' dans la configuration binaire sélectionnée dans le premier signal numérique, de manière à obtenir une première deuxième valeur échantillon, le quatrième instant correspondant à un instant situé entre les instants d'occurrence des deux bits '1' voisins, directement proches des bits '0' et '1' dans la configuration binaire sélectionnée dans le premier signal numérique, de manière à obtenir une deuxième deuxième valeur échantillon.

**45.** Dispositif suivant la revendication 43 ou 44, caractérisé en ce que le deuxième signal de commande est proportionnel à la somme des première et deuxième premières valeurs échantillons et des première et deuxième deuxièmes valeurs échantillons.

**46.** Dispositif suivant la revendication 43 ou 44, caractérisé en ce que le premier signal de commande est proportionnel à la somme de la deuxième première valeur échantillon et de la deuxième deuxième valeur échantillon moins la somme de la première première valeur échantillon et de la première deuxième valeur échantillon.

**47.** Dispositif suivant l'une quelconque des revendications précédentes, caractérisé en ce que le moyen égaliseur variable est à même de faire varier sa réponse en amplitude en fonction de la fréquence en réaction au premier signal de commande et de faire varier sa réponse du point de vue de la phase en réaction au deuxième signal de commande.

**48.** Dispositif suivant la revendication 47, dépendant des revendications 5, 6, 31 ou 32, caractérisé en ce que le moyen égaliseur variable est à même de faire varier sa réponse en amplitude dans une région haute fréquence de la gamme de fréquence opérationnelle par rapport à la réponse en amplitude dans une région basse fréquence dans ladite gamme de fréquence opérationnelle en réaction au premier signal de commande, de manière à amener le résultat de la somme des première et deuxième valeurs échantillons à presque zéro, et est à même de faire varier sa réponse du point de vue de la phase dans ladite région haute fréquence par rapport à la réponse du point de vue de la phase dans ladite région basse fréquence en réaction au deuxième signal de commande, afin d'amener le résultat de la différence entre les première et deuxième valeurs échantillons à presque zéro.

**49.** Dispositif suivant l'une quelconque des revendications précédentes, caractérisé en ce que les premier et deuxième signaux de commande sont appliqués à l'entrée de signal de commande du moyen égaliseur variable par le biais d'éléments intégrateurs (I1, I2).

EP 0 583 818 B1

FIG. 1

(a)

(b)

(c)
$-3\tau$ $-2\tau$ $-\tau$ 0 $\tau$ $2\tau$ $3\tau$

(d)

(e)
$-\tau$ 0 $\tau$

(f)
$-\tau$ $\tau$

(g)

(h)
$-\tau$ 0 $\tau$

(i)
0

(j)
$-\tau$ 0 $\tau$

FIG. 2

34

| | $a(t=-\tau)$ | $q(t=\tau)$ | $a(t=-\tau)+a(t=\tau)$ | $a(t=-\tau)-a(t=\tau)$ | HF eq | $D_h-D_l$ |
|---|---|---|---|---|---|---|
| **positive going transition** | + | + | pos | | too low | |
| | − | − | neg | | too high | |
| | + | − | | pos | | pos |
| | − | + | | neg | | neg |
| | 0 | 0 | 0 | 0 | correct | zero |
| **negative going transition** | + | + | pos | | too high | |
| | − | − | neg | | too low | |
| | + | − | | pos | | neg |
| | − | + | | neg | | pos |
| | 0 | 0 | 0 | 0 | correct | zero |

FIG. 3

(a)

(b)

(c)

(d)

FIG. 4

FIG. 5

FIG. 6A

FIG. 6B

FIG.7

FIG. 8

FIG. 9

FIG. 10

EP 0 583 818 B1

FIG. 11 A

FIG. 11 B

FIG. 12

FIG.13

FIG.14

FIG. 15

FIG.16

FIG.17

FIG.18

FIG. 19

EP 0 583 818 B1

FIG. 20

50

FIG. 21

FIG. 22

FIG. 23

FIG. 24

FIG. 25

FIG. 26

FIG. 27